# EUROPÄISCHE PATENTSCHRIFT

(11) **EP 4 067 041 B1**
(45) Veröffentlichungstag und Bekanntmachung des Hinweises auf die Patenterteilung: **06.11.2024**
(21) Anmeldenummer: 22174535.9
(22) Anmeldetag: 10.09.2020
(51) Int. Cl.: B29C 44/34, B29C 44/44, B29C 44/58, B29C 33/20, B29C 33/22

(54) **VORRICHTUNG ZUM VERARBEITEN EINES PARTIKELSCHAUMMATERIALS ZUM HERSTELLEN EINES PARTIKELSCHAUMFORMTEILS**
DEVICE FOR PROCESSING A PARTICULATE FOAM MATERIAL FOR FORMING A PARTICULATE FOAM MOULDING
DISPOSITIF DE TRAITEMENT D'UNE MATIÈRE EXPANSÉE PARTICULAIRE PERMETTANT DE FABRIQUER UNE PIÈCE MOULÉE EN MATIÈRE EXPANSÉE PARTICULAIRE

(30) Priorität: 02.10.2019 DE 102019126695
(43) Veröffentlichungstag der Anmeldung: 05.10.2022
(62) Teilanmeldung aus: 20771542.6
(73) Patentinhaber: Siegfried Hofmann GmbH, 96215 Lichtenfels (DE)
(72) Erfinder: SCHÜTZ, Johannes, 96052 Bamberg (DE); Deuerling, Michael, 96215 Lichtenfels (DE); MAHR, Stefan, 96272 Hochstadt (DE); FISCHER, Patrick, 96237 Ebersdorf (DE); KÖRBER, Peter, 95326 Kulmbach (DE); FAULHABER, Kai, 96231 Bad Staffelstein (DE); PACHADJIOSKI, Edin, 96215 Lichtenfels (DE)
(74) Vertreter: Hafner & Kohl PartmbB

(56) Entgegenhaltungen:
- EP-A1- 1 524 092
- WO-A2-2011/058071
- DE-A1- 102009 028 987
- DE-A1- 102015 112 149
- US-A- 4 557 881
- US-B1- 6 179 607

## Beschreibung

Die Erfindung betrifft eine Vorrichtung zum Verarbeiten eines Partikelschaumaterials zum Herstellen eines Partikelschaumformteils, wie in Anspruch 1 offenbart.

Entsprechende - regelmäßig auch als Formteilautomaten bezeichnete - Vorrichtungen zum Verarbeiten eines Partikelschaumaterials zum Herstellen eines Partikelschaumformteils sind aus dem Stand der Technik dem Grunde nach bekannt und umfassen typischerweise eine Formwerkzeugeinrichtung mit mehreren Formwerkzeugelementen, wobei wenigstens ein Formwerkzeugelement zur Realisierung einer Offen- und einer Schließstellung der Formwerkzeugeinrichtung entlang einer Bewegungsachse relativ zu wenigstens einem weiteren Formwerkzeugelement bewegbar gelagert ist, und eine Antriebseinrichtung, welche zur Erzeugung und/oder Übertragung einer das bewegbar gelagerte Formwerkzeugelement in eine Bewegung entlang der Bewegungsachse versetzenden Antriebskraft eingerichtet ist.

US4557881 A und WO2011/058071 A2 offenbaren Vorrichtungen zum Verarbeiten eines Partikelschaumaterials zum Herstellen eines Partikelschaumformteils.

Bei Antriebseinrichtungen bekannter Vorrichtungen stellt sich regelmäßig das Problem einer asymmetrisch wirkenden Antriebskraft, welche zu einer nicht parallelen Ausrichtung der Formwerkzeugelemente und somit zu einem nicht exakten Schließen der Formwerkzeugeinrichtung in der Schließstellung führen kann. Darüber hinaus zeigen die Antriebseinrichtungen bekannter Vorrichtungen bisweilen unzureichende Toleranzen der Positionierung der Formwerkzeugelemente in der Schließstellung.

Hiervon ausgehend liegt der Erfindung die Aufgabe zugrunde, eine demgegenüber verbesserte Vorrichtung zum Verarbeiten eines Partikelschaummaterials zum Herstellen eines Partikelschaumformteils anzugeben.

Die Aufgabe wird durch eine Vorrichtung gemäß Anspruch 1 gelöst. Die hierzu abhängigen Ansprüche betreffen mögliche Ausführungsformen der Vorrichtung gemäß Anspruch 1.

Ein erster Aspekt der Erfindung betrifft eine Vorrichtung zum Verarbeiten eines Partikelschaumaterials zum Herstellen eines Partikelschaumformteils. Die Vorrichtung kann auch als Formteilautomat bezeichnet bzw. erachtet werden.

Die Vorrichtung ist im Allgemeinen zum Verarbeiten eines Partikelschaumaterials zum Herstellen eines Partikelschaumformteils eingerichtet. Die Vorrichtung ist sonach zur

Durchführung wenigstens eines Arbeitsprozesses zum Verarbeiten eines Partikelschaumaterials zum Herstellen eines Partikelschaumformteils eingerichtet. Ein entsprechender vermittels der Vorrichtung durchführbarer Arbeitsprozess kann z. B. ein Expansions- oder Verbindungsprozess eines Partikelschaummaterials zum Herstellen eines Partikelschaumformteils sein.

Bei einem vermittels der Vorrichtung verarbeitbaren bzw. zu verarbeitenden Partikelschaummaterial kann es sich um ein expandierbares zw. expandiertes Kunststoffpartikelmaterial handeln. Das Partikelschaummaterial kann z. B. durch expandierbare bzw. expandierte Kunststoffpartikel gebildet sein bzw. expandierbare bzw. expandierte Kunststoffpartikel umfassen. In diesem Zusammenhang wird rein beispielhaft auf expandiertes und/oder expandierbares Polypropylen (PP bzw. EPP), expandiertes und/oder expandierbares Polystyrol (PS bzw. EPS) und auf expandiertes und/oder expandierbares thermoplastisches Elastomer (TPE) verwiesen. Mischungen von sich in wenigstens einem chemischen und/oder physikalischen Parameter unterscheidenden expandierbaren bzw. expandierten Partikelmaterialien bzw. Partikeln sind denkbar; der Begriff "Partikelschaummaterial" kann sonach auch Mischungen von sich in wenigstens einem chemischen und/oder physikalischen Parameter unterscheidenden expandierbaren bzw. expandierten Partikelmaterialien bzw. Partikeln beinhalten.

Im Rahmen des Betriebs der Vorrichtung wird typischerweise wenigstens ein Arbeitsmedium eingesetzt bzw. verwendet. Bei einem Arbeitsmedium handelt es sich im Allgemeinen um ein, insbesondere flüssiges, dampfförmiges oder gasförmiges, Energieträgermedium, wie z. B. um eine Flüssigkeit, d. h. insbesondere Wasser, um Dampf, d. h. insbesondere Heißdampf, oder um ein Gas, welches im Rahmen des Betriebs der Vorrichtung Energie, d. h. insbesondere thermische Energie, kinematische Energie, etc., aufnimmt oder abgibt respektive hierzu ausgebildet ist.

Die Vorrichtung umfasst wenigstens eine Formwerkzeugeinrichtung und wenigstens eine der wenigstens einen Formwerkzeugeinrichtung zuordenbare oder zugeordnete Antriebseinrichtung. Im Weiteren ist zumeist von einer Formwerkzeugeinrichtung und einer Antriebseinrichtung die Rede, dies schließt nicht aus, dass die Vorrichtung mehrere Formwerkzeugeinrichtungen und/oder mehrere Antriebseinrichtungen umfasst.

Die Formwerkzeugeinrichtung umfasst ein erstes Formwerkzeugelement und wenigstens ein weiteres Formwerkzeugelement. Das erste Formwerkzeugelement ist entlang einer eine Bewegungsbahn definierenden Bewegungsachse, hierbei handelt es sich, wie sich im Weiteren ergibt, insbesondere um eine Translationsachse, relativ zu dem wenigstens einen weiteren Formwerkzeugelement bewegbar gelagert. Alternativ oder ergänzend ist das wenigstens eine weitere Formwerkzeug entlang der oder wenigstens einer Bewegungsachse, hierbei handelt es sich, wie sich im Weiteren ergibt, insbesondere um eine Translationsachse, relativ zu dem ersten Formwerkzeugelement bewegbar gelagert. Die Formwerkzeugeinrichtung umfasst sonach mehrere Formwerkzeugelemente, wobei wenigstens ein Formwerkzeugelement entlang einer Bewegungsachse relativ zu wenigstens einem weiteren Formwerkzeugelement bewegbar gelagert ist.

Das wenigstens eine bewegbar gelagerte Formwerkzeugelement ist zwischen wenigstens einer ersten Stellung und wenigstens einer weiteren Stellung bewegbar gelagert. Die wenigstens eine erste Stellung kann mit wenigstens einer Offenstellung der Formwerkzeugeinrichtung korreliert sein, die wenigstens eine weitere Stellung kann mit einer wenigstens einer Schließstellung der Formwerkzeugeinrichtung korreliert sein oder umgekehrt. In der wenigstens einen Offenstellung der Formwerkzeugeinrichtung ist eine Zugangsmöglichkeit in eine formgebende Kavität der Formwerkzeugeinrichtung gegeben. In der wenigstens einen Schließstellung ist keine Zugangsmöglichkeit in eine formgebende Kavität der Formwerkzeugeinrichtung gegeben. Über die Bewegung des bewegbar gelagerten Formwerkzeugelements relativ zu dem wenigstens einen weiteren Formwerkzeugelement ist sonach wenigstens eine Offenstellung und wenigstens eine Schließstellung der Formwerkzeugeinrichtung realisierbar. Die Formwerkzeugeinrichtung lässt sich sonach über Bewegungen des bewegbar gelagerten Formwerkzeugelements in wenigstens eine Offen- und in wenigstens eine Schließstellung überführen.

Aus vorstehenden Ausführungen ergibt sich, dass das wenigstens eine bewegbar gelagerte Formwerkzeugelement und somit auch die Formwerkzeugeinrichtung in mehrere Offenstellungen bewegbar sein kann. Jeweilige Offenstellungen unterscheiden sich in ihren jeweiligen Öffnungsgraden. Aus vorstehenden Ausführungen ergibt sich weiterhin, dass das wenigstens eine bewegbar gelagerte Formwerkzeugelement und somit auch die Formwerkzeugeinrichtung in mehrere Schließstellungen bewegbar sein kann. Jeweilige Schließstellungen unterscheiden sich in ihren jeweiligen Schließgraden.

Für die beispielhafte Ausführungsform, in welcher das wenigstens eine bewegbar gelagerte Formwerkzeugelement in mehrere Schließstellungen bewegbar ist, gilt, dass eine erste Schließstellung einen ersten Schließgrad der Formwerkzeugeinrichtung und eine zweite Schließstellung einen von dem ersten Schließgrad unterschiedlichen, d. h. insbesondere höheren, zweiten Schließgrad der Formwerkzeugeinrichtung bedingt. Die Bewegung des bewegbar gelagerten Formwerkzeugelements von der ersten Schließstellung in die zweite Schließstellung kann eine Prägehubbewegung, kurz ein Prägehub, sein. In der zweiten Schließstellung kann sonach eine Prägekraft auf ein in der formgebenden Kavität der Formwerkzeugeinrichtung befindliches Partikelschaummaterial ausgeübt werden. Durch Bewegen des bewegbar gelagerten Formwerkzeugelements von der ersten Schließstellung in die zweite Schließstellung kann sonach ein Prägevorgang realisiert werden, in welchem eine Prägekraft auf ein in der formgebenden Kavität der Formwerkzeugeinrichtung befindliches Partikelschaummaterial ausübbar ist. Die zweite Schließstellung kann sonach als Prägestellung bezeichnet bzw. erachtet werden.

Wie sich im Weiteren ergibt, umfasst die Formwerkzeugeinrichtung ein bewegbar gelagertes Formwerkzeugelement und ein nicht bewegbar gelagertes Formwerkzeugelement. Das bewegbar gelagerte Formwerkzeugelement ist zwischen einer ersten und einer zweiten Stellung relativ zu dem weiteren Formwerkzeugelement bewegbar gelagert. Die wenigstens eine erste Stellung kann, wie erwähnt, mit wenigstens einer Offenstellung der Formwerkzeugeinrichtung korreliert sein, die wenigstens eine weitere bzw. zweite Stellung kann, wie erwähnt, mit wenigstens einer Schließstellung der Formwerkzeugeinrichtung korreliert sein.

In allen Ausführungsformen kann ein Formwerkzeugelement als ein eine formgebende Kavität der Formwerkzeugeinrichtung begrenzendes Formwerkzeugteil, insbesondere eine eine formgebende Kavität der Formwerkzeugeinrichtung begrenzende Formwerkzeughälfte ausgebildet sein. Alternativ oder ergänzend kann ein Formwerkzeugelement als ein Formwerkzeugträgerelement, welches zum Tragen eines eine formgebende Kavität der Formwerkzeugeinrichtung begrenzenden Formwerkzeugteils ausgebildet ist, ausgebildet sein. Die der Formwerkzeugeinrichtung zuordenbare oder zugeordnete Antriebseinrichtung ist zur Erzeugung und/oder Übertragung einer das jeweils bewegbare Formwerkzeugelement oder die jeweils bewegbaren Formwerkzeugelemente in eine Bewegung entlang der Bewegungsachse versetzenden Antriebskraft eingerichtet. Die Antriebseinrichtung kann, wie sich im Weiteren ergibt, mehrere zur Erzeugung und/oder Übertragung einer das jeweils bewegbar gelagerte Formwerkzeugelement oder die jeweils bewegbar gelagerten Formwerkzeugelemente in eine Bewegung entlang der Bewegungsachse versetzenden Antriebskraft zusammenwirkende Bestandteile umfassen.

Die Antriebseinrichtung kann z. B. wenigstens eine Antriebseinheit zur Erzeugung der Antriebskraft und/oder wenigstens eine Kraftübertragungseinheit zur Übertragung einer Antriebskraft auf das jeweils bewegbar gelagerte Formwerkzeugelement umfassen. Eine entsprechende Antriebseinheit kann z. B. als Antriebsmotor, insbesondere als elektrischer Antriebsmotor, ausgebildet sein oder wenigstens einen solchen umfassen. Eine entsprechende Kraftübertragungseinheit kann z. B. als Kraftübertragungsmittel, insbesondere als Kraftübertragungsriemen, -kette, etc., ausgebildet sein oder einen solchen umfassen.

Der hierin verwendete Begriff "Antriebskraft" umfasst in allen Ausführungsformen auch ein "Antriebsmoment"; der Begriff "Antriebskraft" kann sonach mit einem "Antriebsmoment" gleichgesetzt werden.

Die Antriebseinrichtung ist als Linearantriebseinrichtung ausgebildet oder umfasst wenigstens eine solche. Bei der Bewegungsachse, entlang welcher das jeweils bewegbar gelagerte Formwerkzeugelement bewegbar ist, handelt es sich, wie erwähnt, sonach um eine Linear- bzw. Translationsachse. Bei Bewegungen des jeweils bewegbar gelagerten Formwerkzeugelements entlang der Bewegungsachse handelt es sich sonach um Linear- bzw. Translationsbewegungen.

Die Ausbildung der Antriebseinrichtung als Linearantriebseinrichtung ermöglicht ein exaktes Bewegen und Positionieren des jeweils bewegbar gelagerten Formwerkzeugelements in jeweiligen ersten und zweiten Stellungen bzw. zwischen jeweiligen ersten und zweiten Stellungen. Die Ausbildung der Antriebseinrichtung als Linearantriebseinrichtung ermöglicht weiterhin eine (weitgehend) symmetrische Kraftübertragung auf das jeweils bewegbar gelagerte Formwerkzeugelement. Die Ausbildung der Antriebseinrichtung als Linearantriebseinrichtung resultiert sonach in einer Vielzahl an Vorteilen im Hinblick auf die Bewegung und Positionierung des jeweils bewegbar gelagerten Formwerkzeugelements und somit auch im Hinblick auf die Überführung der Formwerkzeugeinrichtung in die Offen- und/oder in die wenigstens eine Schließstellung.

Insbesondere für die beschriebene beispielhafte Ausführungsform, in welcher die Formwerkzeugeinrichtung in mehrere Schließstellungen überführbar ist, wobei eine Schließstellung als eine Prägestellung bezeichnet bzw. erachtet werden kann, gilt, dass die Ausbildung der Antriebseinrichtung als Linearantriebseinrichtung auch bei entsprechenden Prägevorgängen, bei welchen bisweilen eine ungleichmäßige, d. h. insbesondere außerzentrische, Lastverteilung gegeben sein kann, eine Parallelität der Formwerkzeugelement sicherstellt.

Insgesamt liegt damit eine verbesserte Vorrichtung zum Verarbeiten eines Partikelschaummaterials zum Herstellen eines Partikelschaumformteils vor.

Die Linearantriebseinrichtung umfasst wenigstens ein erstes Linearantriebselement und wenigstens ein mit diesem, insbesondere über einen mechanischen Eingriff, hierbei handelt es sich, wie sich im Weiteren ergibt, insbesondere zum einen Gewindeeingriff, zusammenwirkendes zweites Linearantriebselement. Das erste Linearantriebselement ist typischerweise entlang der Bewegungsachse bewegbar gelagert. Das zweite Linearantriebselement ist typischerweise nicht entlang der Bewegungsachse bewegbar gelagert. Das zweite Linearantriebselement kann eingerichtet sein, eine das erste Linearantriebselement in eine Bewegung entlang der Bewegungsachse versetzende Antriebskraft zu erzeugen und/oder eine das erste Linearantriebselement in eine Bewegung entlang der Bewegungsachse versetzende Antriebskraft auf das erste Linearantriebselement zu übertragen.

Das erste Linearantriebselement kann als ein erstes Gewindeelement, d. h. insbesondere als eine Gewindespindel, ausgebildet sein oder wenigstens ein(e) solche(s) umfassen. Das zweite Linearantriebselement kann als ein mit dem ersten Gewindeelement in mechanischem Eingriff stehendes zweites Gewindeelement, d. h. insbesondere als eine mit der Gewindespindel in mechanischem Eingriff (Gewindeeingriff) stehende Spindelmutter, ausgebildet sein oder wenigstens ein(e) solche(s) umfassen. Die Linearantriebseinrichtung kann sonach als ein ein erstes Gewindeelement, d. h. insbesondere eine Gewindespindel, und ein zweites Gewindeelement, d. h. insbesondere eine Spindelmutter, umfassendes Gewinde- bzw. Schraubgetriebe ausgebildet sein oder wenigstens ein solches umfassen.

Das erste Gewindeelement, d. h. typischerweise die Gewindespindel, ist typischerweise translatorisch entlang der Bewegungsachse, jedoch typischerweise nicht drehbar gelagert. Das zweite Gewindeelement, d. h. typischerweise die Spindelmutter, ist typischerweise drehbar um eine Drehachse, d. h. insbesondere um die Bewegungsachse oder eine Symmetrie- bzw. Zentralachse des zweiten Gewindeelements, jedoch typischerweise nicht translatorisch bewegbar gelagert. Eine jeweilige als Gewinde- bzw. Schraubgetriebe ausgebildete Linearantriebseinrichtung ist sonach typischerweise mit einem translatorisch bewegbaren, jedoch nicht rotatorisch bewegbaren ersten Gewindeelement, d. h. typischerweise einer Gewindespindel, und einem rotatorisch bewegbaren, jedoch nicht translatorisch bewegbaren zweiten Gewindeelement, d. h. typischerweise einer Spindelmutter, konfiguriert.

Die Linearantriebseinrichtung kann wenigstens eine dem ersten Linearantriebselement zuordenbare oder zugeordnete Linearantriebseinheit und/oder wenigstens eine dem zweiten Linearantriebselement zuordenbare oder zugeordnete Linearantriebseinheit umfassen. Eine jeweilige Linearantriebseinheit kann eingerichtet sein, eine das erste Linearantriebselement in eine Bewegung entlang der Bewegungsachse versetzende Antriebskraft zu erzeugen. Eine jeweilige Linearantriebseinheit stellt eine mögliche Ausführungsform einer weiter oben erwähnten Antriebseinheit der Antriebseinrichtung dar. Eine jeweilige Linearantriebseinheit kann sonach z. B. als Linearantriebsmotor, insbesondere als elektrischer Linearantriebsmotor, ausgebildet sein oder wenigstens einen solchen umfassen.

Grundsätzlich gilt, dass eine Linearantriebseinheit mehreren Linearantriebseinrichtungen zuordenbar oder zugeordnet sein kann. Eine Linearantriebseinheit kann sonach eingerichtet sein, eine ein erstes Linearantriebselement einer ersten Linearantriebseinrichtung in eine Bewegung entlang der Bewegungsachse versetzende Antriebskraft zu erzeugen und eine wenigstens ein weiteres erstes Linearantriebselement wenigstens einer weiteren Linearantriebseinrichtung in eine Bewegung entlang der Bewegungsachse versetzende Antriebskraft zu erzeugen. Derart kann eine synchrone Bewegung mehrerer erster Linearantriebselemente entlang der Bewegungsachse realisiert und/oder sichergestellt werden.

Im Hinblick auf die vorstehend beschriebene Ausführungsform der Linearantriebseinrichtung als ein ein erstes Gewindeelement und ein zweites Gewindeelement umfassendes Gewinde- bzw. Schraubgetriebe mit einem translatorisch bewegbaren, jedoch nicht rotatorisch bewegbaren ersten Gewindeelement und einem rotatorisch bewegbaren, jedoch nicht translatorisch bewegbaren zweiten Gewindeelement gilt, dass die Linearantriebseinheit insbesondere eingerichtet ist, eine das zweite Gewindeelement in eine Drehbewegung versetzende Antriebskraft zu erzeugen. Das in eine Drehbewegung versetzte zweite Gewindeelement versetzt das mit diesem in mechanischem Eingriff, hierbei handelt es sich, wie erwähnt, insbesondere um einen Gewindeeingriff, stehende erste Gewindeelement in eine translatorische Bewegung entlang der Bewegungsachse.

Das erste Linearantriebselement ist mit einem jeweils bewegbar gelagerten Formwerkzeugelement gekoppelt, insbesondere bewegungsgekoppelt. Bewegungen des, wie erwähnt, bewegbar gelagerten ersten Linearantriebselements können sonach aufgrund der Kopplung bzw. Bewegungskopplung mit dem jeweils bewegbar gelagerten Formwerkzeugelement mit Bewegungen des jeweils bewegbar gelagerten Formwerkzeugelements korrelieren. Das erste Linearantriebselement kann direkt oder indirekt mit dem jeweils bewegbar gelagerten Formwerkzeugelement gekoppelt bzw. bewegungsgekoppelt sein. Mithin können Bewegungen des ersten Linearantriebselement direkt oder indirekt auf das jeweils bewegbar gelagerte Formwerkzeugelement übertragen werden. Die Kopplung bzw. Bewegungskopplung zwischen dem ersten Linearantriebselement und dem jeweils bewegbar gelagerten Formwerkzeugelement kann durch eine direkte oder indirekte Befestigung des ersten Linearantriebselements an dem jeweils bewegbar gelagerten Formwerkzeugelement realisiert sein; das erste Linearantriebselement kann sonach direkt oder indirekt an dem jeweils bewegbar gelagerten Formwerkzeugelement befestigt sein. Die Befestigung des ersten Linearantriebselements an dem jeweils bewegbar gelagerten Formwerkzeugelement kann über form- und/oder kraft- und/oder stoffschlüssige Befestigungsarten, d. h. z. B. über Klemm-, Spann-, Schraub-, oder Schweißbefestigungen, realisiert sein. Die Befestigung des ersten Linearantriebselements an dem jeweils bewegbar gelagerten Formwerkzeugelement kann (beschädigungs- bzw. zerstörungsfrei) lösbar sein.

Ein Formwerkzeugelement weist wenigstens eine von einem Linearantriebselement, d. h. insbesondere einem ersten Linearantriebselement, durchsetzbare, insbesondere bohrungsartige bzw. -förmige oder schlitzartige bzw. -förmige, Öffnung auf aufweisen. Gemäß der Erfindung aufweist ein nicht bewegbar gelagertes Formwerkzeugelement wenigstens eine von einem Linearantriebselement, d. h. insbesondere einem entsprechenden ersten Linearantriebselement, durchsetzbare bzw. durchsetzte Öffnung. Eine entsprechende Öffnung ist typischerweise so bemessen, dass zwischen den diese begrenzenden Wandungen des jeweiligen Formwerkzeugelements und einem diese durchsetzenden Linearantriebselement ein gewisser Abstand gegeben ist, sodass das die Öffnung durchsetzende Linearantriebselement die die Öffnung begrenzenden Wandungen des jeweiligen Formwerkzeugelements nicht kontaktiert. Mit anderen Worten weist eine entsprechende Öffnung gegenüber einem diese durchsetzenden Linearantriebselement typischerweise ein gewisses Übermaß auf, sodass das die Öffnung durchsetzende Linearantriebselement relativ zu dem die Öffnung aufweisenden Formwerkzeugelement bewegbar gelagert ist. Eine entsprechende Öffnung in einem Formwerkzeugelement kann als Durchgangsöffnung für ein entsprechendes Linearantriebselement bezeichnet bzw. erachtet werden. Prinzipiell ist es jedoch gleichermaßen denkbar, dass in der Öffnung wenigstens ein, insbesondere in mechanischem Eingriff mit dem die Öffnung durchsetzenden

Linearantriebselement stehendes, Gewindelager angeordnet oder ausgebildet ist. Das Gewindelager kann drehbar relativ zu dem jeweiligen Formwerkzeugelement in der Öffnung aufgenommen sein.

Wie erwähnt, umfasst die Formwerkzeugeinrichtung in einer beispielhaften Konfiguration ein bewegbar gelagertes erstes Formwerkzeugelement und ein nicht bewegbar gelagertes weiteres Formwerkzeugelement. Gemäß der Erfindung aufweist das nicht bewegbar gelagerte Formwerkzeugelement wenigstens eine entsprechende Öffnung. Die Formwerkzeugeinrichtung umfasst ein erstes Formwerkzeugelement und ein weiteres bzw. zweites Formwerkzeugelement, wobei das erste Formwerkzeugelement relativ zu dem weiteren bzw. zweiten Formwerkzeugelement bewegbar gelagert ist. Das weitere Formwerkzeugelement ist dabei nicht bewegbar, mithin ortsfest, gelagert. Dabei weist kann das weitere Formwerkzeugelement wenigstens eine von wenigstens einem ersten Linearantriebselement durchsetzbare bzw. durchsetzte Öffnung auf. Das mit dem bewegbar gelagerten ersten Formwerkzeugelement gekoppelte, insbesondere bewegungsgekoppelte, erste Linearantriebselement kann die wenigstens eine Öffnung in dem weiteren bzw. zweiten Formwerkzeugelement durchsetzen.

Die Vorrichtung kann eine der wenigstens einen Linearantriebseinrichtung zuordenbare oder zugeordnete Führungseinrichtung umfassen, welche eingerichtet ist, wenigstens ein entlang der Bewegungsachse bewegbar gelagertes Linearantriebselement bei einer Bewegung entlang der Bewegungsachse entlang der Bewegungsachse zu führen. Bei Bewegungen des entlang der Bewegungsachse bewegbar gelagerten Linearantriebselements kann es sich sonach um geführte Bewegungen handeln. Derart kann eine exakte Bewegung und Positionierung des jeweils bewegbar gelagerten Formwerkzeugelements in jeweiligen ersten und zweiten Stellungen bzw. zwischen jeweiligen ersten und zweiten Stellungen sichergestellt werden. Da die wenigstens eine weitere bzw. zweite Stellung, wie erwähnt, typischerweise mit wenigstens einer Schließstellung der Formwerkzeugeinrichtung korreliert ist, lässt sich sonach auch eine exakte Positionierung der Formwerkzeugelemente in wenigstens einer Schließstellung der Formwerkzeugeinrichtung sicherstellen, was sich positiv auf die Prozesssicherheit und -qualität des mit der Vorrichtung durchführbaren Prozesses zum Verarbeiten eines Partikelschaummaterials zum Herstellen eines Partikelschaumformteils auswirkt.

Eine entsprechende Führungseinrichtung kann als Linearführung ausgebildet sein oder wenigstens eine solche umfassen. Eine entsprechende Linearführung kann ein erstes Linearführungselement und wenigstens ein weiteres Linearführungselement umfassen. Das erste Linearführungselement wirkt unter Ausbildung einer Linearführung des bewegbar gelagerten Linearantriebselements entlang der Bewegungsachse mit dem wenigstens einen weiteren Linearführungselement zusammen. Das erste Linearführungselement kann eine mit der Bewegungsachse zusammenfallend oder parallel zu dieser angeordnete oder ausgerichtete Führungsachse definieren. Das erste Linearführungselement kann konkret z. B. als Führungsschiene oder -stange ausgebildet sein. Das mit dem ersten Linearführungselement zusammenwirkende - hierunter kann insbesondere ein mechanischer Eingriff verstanden werden - wenigstens eine weitere Linearführungselement kann mit dem zu führenden bewegbar gelagerten Linearantriebselement gekoppelt, d. h. insbesondere bewegungsgekoppelt, sein. Das wenigstens eine weitere Linearführungselement kann sonach ebenso entlang der Bewegungsachse bewegbar gelagert sein. Das wenigstens eine weitere Linearführungselement kann konkret z. B. als Führungsschlitten ausgebildet sein.

Die Vorrichtung kann mehrere in einer oder mehreren Raumebenen angeordnete oder ausgebildete Linearantriebseinrichtungen umfassen. Die durch die Linearantriebseinrichtung gegebenen Vorteile im Hinblick auf die Bewegung und Positionierung des wenigstens einen bewegbar gelagerten Formwerkzeugelements und somit auch im Hinblick auf die Überführung der Formwerkzeugeinrichtung in die wenigstens eine Offen- und/oder in die wenigstens eine Schließstellung können sich mit mehreren Linearantriebseinrichtungen (erheblich) verstärken.

Wie erwähnt, umfasst eine Linearantriebseinrichtung typischerweise ein erstes und wenigstens ein weiteres Linearantriebselement. Die Anordnung mehrerer Linearantriebseinrichtungen bedingt sonach typischerweise, dass jeweilige erste Linearantriebselemente, bei welchen es sich, wie erwähnt, typischerweise um die mit dem jeweils bewegbaren Formwerkzeugelement gekoppelten, d. h. insbesondere bewegungsgekoppelten, Linearantriebselemente handelt, in einer oder mehreren Raumebenen angeordnet sind. Unter Raumebenen können horizontal ausgerichtete Raumebenen, vertikal ausgerichtete Raumebenen, oder winklig bezüglich einer horizontalen oder vertikalen Raumebene ausgerichtete Raumebenen verstanden werden. Mithin können jeweilige erste Linearantriebselemente z. B. in einer oder mehreren horizontalen und/oder vertikalen Raumebenen angeordnet oder ausgebildet sein.

Mehrere in einer bestimmten Raumebene angeordnete erste Linearantriebselemente sind dabei typischerweise parallel zueinander angeordnet. Typischerweise sind auch jeweilige in unterschiedlichen Raumebenen angeordnete oder ausgebildete erste Linearantriebselemente parallel zueinander angeordnet. Mithin können wenigstens zwei Linearantriebseinrichtungen parallel in einer Raumebene angeordnet oder ausgebildet sein.

Gemäß einer konkreten Ausführungsform kann die Vorrichtung wenigstens zwei parallel in einer ersten Raumebene angeordnete oder ausgebildete Linearantriebseinrichtungen und wenigstens eine in wenigstens einer weiteren Raumebene angeordnete oder ausgebildete weitere Linearantriebseinrichtung umfassen. Die Vorrichtung kann sonach eine Gruppe aus wenigstens zwei in einer ersten Raumebene angeordneten oder ausgebildeten Linearantriebseinrichtungen und wenigstens eine in wenigstens einer weiteren Raumebene angeordnete oder ausgebildete weitere Linearantriebseinrichtung umfassen.

Gemäß einer weiteren konkreten Ausführungsform kann die Vorrichtung wenigstens zwei parallel in einer ersten Raumebene angeordnete oder ausgebildete Linearantriebseinrichtungen und wenigstens zwei parallel in einer parallel oder winklig zu der ersten Raumebene ausgerichteten weiteren Raumebene angeordnete oder ausgebildete Linearantriebseinrichtungen umfassen. Die Vorrichtung kann sonach eine erste Gruppe aus wenigstens zwei in einer ersten Raumebene angeordneten oder ausgebildeten Linearantriebseinrichtungen und wenigstens eine weitere Gruppe aus wenigstens zwei in wenigstens einer parallel oder winklig zu der ersten Raumebene ausgerichteten weiteren Raumebene angeordneten oder ausgebildeten Linearantriebseinrichtungen umfassen.

Mithin sind, insbesondere bei einer Stirnansicht auf die Formwerkzeugeinrichtung bzw. einer Ansicht auf die Haupterstreckungsebene eines Formwerkzeugelements, vieleckige Anordnungen, d. h. insbesondere drei-, vier- oder fünfeckige Anordnungen, entsprechender Linearantriebseinrichtungen, d. h. insbesondere erster Linearantriebselemente, möglich. Die jeweiligen vieleckigen Anordnungen der ersten Linearantriebselemente ermöglichen eine exakte Abstützung bzw. Lagerung des mit den ersten Linearantriebselementen gekoppelten bewegbar gelagerten Formwerkzeugelements.

Die Anordnung der ersten Linearantriebselemente ist dabei typischerweise so gewählt, dass sich kein erstes Linearantriebselement durch eine formgebende Kavität der Formwerkzeugeinrichtung erstreckt.

Ausgehend von einer beispielhaften rechteckigen Geometrie eines Grundkörpers eines Formwerkzeugelements - die rechteckige Geometrie des Grundkörpers des jeweiligen Formwerkzeugelements ist typischerweise unabhängig von der Geometrie der formgebenden Kavität der Formwerkzeugeinrichtung - ist es z. B. denkbar, dass jeweils wenigstens ein erstes Linearantriebselement im Bereich der oberen und/oder unteren und/oder seitlichen Ränder bzw. im Bereich der Ecken des rechteckigen Grundkörpers angeordnet ist. Gemäß einer konkreten Ausführungsform kann in jeder Ecke des rechteckigen Grundkörpers eines Formwerkzeugelements ein erstes Linearantriebselement angeordnet sein. Das jeweilig erste Linearantriebselement setzt, insbesondere mit einem freien Ende, stirnseitig an der jeweiligen Ecke des rechteckigen Grundkörpers des Formwerkzeugelements an.

Die Vorrichtung kann wenigstens eine Abstützeinrichtung umfassen, welche zur Abstützung wenigstens eines ersten Linearantriebselements, insbesondere in einer Betriebsposition und/oder -ausrichtung, eingerichtet ist. Das Abstützen eines ersten Linearantriebselements in einer jeweiligen Betriebsposition und/oder -ausrichtung - hierunter ist typischerweise eine Position und/oder Ausrichtung des jeweiligen ersten Linearantriebselements zu verstehen, in welcher dieses eine gewünschte Bewegung eines jeweils bewegbar gelagerten Formwerkzeugelements entlang der Bewegungsachse ermöglicht - verbessert die exakte Bewegung und Positionierung des jeweils bewegbar gelagerten Formwerkzeugelements.

In einer Ausführungsform mit mehreren ersten Linearantriebselementen kann die Abstützeinrichtung eingerichtet sein, mehrere erste Linearantriebselemente abzustützen. Die Abstützeinrichtung kann hierfür wenigstens ein zwei erste Linearantriebselemente, insbesondere starr, miteinander unter Ausbildung einer Abstützung verbindendes, insbesondere traversenartiges bzw. -förmiges, Abstützelement umfassen.

Die Vorrichtung kann wenigstens eine der Linearantriebseinrichtung, insbesondere einem bewegbar gelagerten ersten Linearantriebselement, zuordenbare oder zugeordnete Bremseinrichtung umfassen, welche zur Erzeugung einer eine Bewegung der Linearantriebseinrichtung, insbesondere des bewegbar gelagerten ersten Linearantriebselements, entlang der Bewegungsachse bremsenden Bremskraft oder zur Erzeugung einer eine Bewegung der Linearantriebseinrichtung, insbesondere des bewegbar gelagerten ersten Linearantriebselements, sperrenden Sperrkraft eingerichtet ist. Vermittels der Bremseinrichtung lassen sich Bewegungen der Linearantriebseinrichtung bzw. jeweiliger bewegbar gelagerter erster Linearantriebselemente abbremsen - hierfür kann die Bremseinrichtung eine einer auf ein bewegtes Linearantriebselement wirkenden Bewegungskraft entgegen wirkende Bremskraft erzeugen, welche in einer Verzögerung der Bewegung des jeweiligen Linearantriebselements resultiert - oder vollständig sperren - hierfür kann die Bremseinrichtung eine einer auf ein unbewegtes Linearantriebselement wirkenden Bewegungskraft entgegen wirkende Sperrkraft erzeugen, welche in einer Sperrung von Bewegungen des jeweiligen Linearantriebselements resultiert.

Die oder eine Bremseinrichtung kann insbesondere zur Erzeugung einer einer im Rahmen eines vermittels der Vorrichtung erfolgenden Verarbeitungsvorgangs von Partikelschaummaterial, insbesondere eines durch ein druckbeaufschlagtes Prozessmedium, wie z. B. Dampf, bedingten Expansionsvorgangs von Partikelschaummaterial, erzeugten Kraft, entgegen wirkenden, insbesondere betragsmäßig gleichen oder höheren, Sperrkraft eingerichtet sein. Über die Bremseinrichtung respektive über eine über die Bremseinrichtung erzeugbare Bremskraft lässt sich die Formwerkzeugeinrichtung sonach auch im Rahmen des Betriebs der Vorrichtung in der wenigstens einen Schließstellung sichern. Die Bremseinrichtung kann die im Betrieb der Vorrichtung in der wenigstens einen Schließstellung auf die Formwerkzeugelemente wirkenden Kräfte sonach kompensieren, entsprechend kann die Linearantriebseinrichtung sonach von den im Betrieb der Vorrichtung in der wenigstens einen Schließstellung auf die Formwerkzeugelemente wirkenden Kräften isoliert werden.

Die Bremseinrichtung kann in allen Ausführungsformen wenigstens ein Bremselement umfassen, welches in eine Bremsstellung, in welcher dieses unter Ausbildung einer Bremskraft bzw. -wirkung direkt oder indirekt auf ein erstes und/oder zweites Linearantriebselement einwirkt, und einer Nichtbremsstellung, in welcher dieses nicht unter Ausbildung einer Bremskraft bzw. -wirkung direkt oder indirekt auf ein erstes und/oder zweites Linearantriebselement einwirkt, bewegbar ist.

In einer konkreten Ausführungsform kann die Bremseinrichtung wenigstens ein Bremselement umfassen, welches in eine Bremsstellung, in welcher dieses unter Ausbildung einer Bremskraft bzw. -wirkung direkt oder indirekt gegen ein drehendes Linearantriebselement, d. h. insbesondere gegen ein zweites Linearantriebselement, oder gegen ein mit einem drehenden Linearantriebselement, d. h. insbesondere mit einem zweiten Linearantriebselement, verbundenes Bauelement bewegt ist, und einer Nichtbremsstellung, in welcher dieses nicht unter Ausbildung einer Bremskraft bzw. -wirkung direkt oder indirekt gegen ein drehendes Linearantriebselement, d. h. insbesondere ein zweites Linearantriebselement, oder gegen ein mit einem drehenden Linearantriebselement, d. h. insbesondere einem zweiten Linearantriebselement, verbundenes Bauelement bewegt ist, bewegbar ist.

Die Bewegung des wenigstens einen Bremselements kann in allen Ausführungsformen in der bzw. parallel zu der Bewegungsachse des bewegbar gelagerten Linearantriebselements erfolgen; das wenigstens eine Bremselement kann sonach in der bzw. parallel zu der Bewegungsachse des bewegbar gelagerten Linearantriebselements bewegbar gelagert sein. Jedoch ist prinzipiell auch wenigstens ein radial bezüglich der Bewegungsachse bewegbar gelagertes Bremselement denkbar.

Das wenigstens eine Bremselement kann in allen Ausführungsformen als Bremsbelag ausgebildet sein oder wenigstens einen solchen umfassen.

Die Vorrichtung kann eine hardware- und/oder softwaremäßig implementierte Steuereinrichtung umfassen, welche zur Steuerung des Betriebs der Antriebseinrichtung zur Realisierung bestimmter Bewegungs- bzw. Geschwindigkeitsprofile des jeweils bewegbar gelagerten Formwerkzeugelements eingerichtet ist. Die Steuereinrichtung kann insbesondere zur Erzeugung von den Betrieb der Antriebseinrichtung steuernden Steuerinformationen eingerichtet sein. Die Steuereinrichtung kann sonach auch zur Steuerung von Bewegungen eines jeweiligen bewegbar gelagerten Linearantriebselements eingerichtet sein. Ein entsprechendes Bewegungs- bzw. Geschwindigkeitsprofil kann z. B. eine bestimmte Bewegung eines jeweils bewegbar gelagerten Formwerkzeugelements, insbesondere ausgehend von der wenigstens einen Offenstellung, in die wenigstens eine Schließstellung der Formwerkzeugeinrichtung und/oder eine bestimmte Bewegung eines jeweils bewegbar gelagerten Formwerkzeugelements, insbesondere ausgehend von der wenigstens einen Schließstellung, in die wenigstens eine Offenstellung der Formwerkzeugeinrichtung definieren.

Die oder eine Steuereinrichtung kann ferner, insbesondere auf Grundlage wenigstens eines Bewegungs- bzw. Geschwindigkeitsprofils eines jeweils bewegbar gelagerten Formwerkzeugelements, zur Steuerung des Betriebs der Bremseinrichtung, insbesondere zur Realisierung bestimmter Bremskraftprofile, eingerichtet sein. Die Steuereinrichtung kann sonach insbesondere zur Erzeugung von den Betrieb der Bremseinrichtung steuernden Steuerinformationen eingerichtet sein. Die Steuereinrichtung kann sonach auch zur Steuerung von Bewegungen eines jeweiligen bewegbar gelagerten Bremselements eingerichtet sein.

Die Vorrichtung kann ferner wenigstens eine hardware- und/oder softwaremäßig implementierte Erfassungseinrichtung umfassen, welche zur Erfassung von Bewegungen und/oder Positionierungen eines bewegbar gelagerten Formwerkzeugelements und/oder eines bewegbar gelagerten Linearantriebselements der Linearantriebseinrichtung eingerichtet ist. Die Erfassungseinrichtung kann wenigstens ein, z. B. optisch und/oder elektrisch und/oder magnetisch wirkendes, Erfassungselement umfassen, welches in Abhängigkeit von Bewegungen und/oder Positionierungen eines bewegbar gelagerten Formwerkzeugelements und/oder eines bewegbar gelagerten Linearantriebselements, d. h. z. B. eines ersten und/oder zweiten Linearantriebselements, zur Erzeugung von Erfassungsinformationen eingerichtet ist. Entsprechende Erfassungsinformationen können Grundlage für die vermittels der Steuereinrichtung durchführbare bzw. durchgeführte Steuerung des Betriebs der Antriebseinrichtung und/oder der Bremseinrichtung bilden. Die Erfassungseinrichtung kann sonach mit der Steuereinrichtung, und umgekehrt, insbesondere bidirektional, kommunizieren. Die Vorrichtung umfasst typischerweise weitere Funktionseinrichtungen, welche zum Verarbeiten von Partikelschaummaterial zum Herstellen eines Partikelschaumformteils erforderlich sind. Hierzu zählen beispielsweise eine Dampferzeugungseinrichtung zum Erzeugen von der Formwerkzeugeinrichtung zuführendem Dampf und/oder eine Dampfspeichereinrichtung zum Speichern von der Formwerkzeugeinrichtung zuführendem Dampf.

Ein weiterer Aspekt, nicht den Ansprüchen entsprechend, betrifft ein Verfahren zum Verarbeiten eines Partikelschaummaterials zum Herstellen eines Partikelschaumformteils, welches sich dadurch auszeichnet, dass eine Vorrichtung gemäß der Erfindung zur Durchführung des Verfahrens verwendet wird.

Die Erfindung ist anhand von Ausführungsbeispielen in den Zeichnungen nochmals erläutert.

Dabei zeigt:
Fig. 1, 2 je eine Prinzipdarstellung einer Vorrichtung zum Verarbeiten eines Partikelschaumaterials zum Herstellen eines Partikelschaumformteils gemäß einem Ausführungsbeispiel in einer Seitenansicht;
Fig. 3 eine Prinzipdarstellung einer Vorrichtung zum Verarbeiten eines Partikelschaumaterials zum Herstellen eines Partikelschaumformteils gemäß einem weiteren Ausführungsbeispiel in einer im Vergleich zu den Ansichten gemäß Fig. 1, 2 um 90° gedrehten Rückansicht; und
Fig. 4, 5 je eine Prinzipdarstellung einer Bremseinrichtung einer Vorrichtung zum Verarbeiten eines Partikelschaumaterials zum Herstellen eines Partikelschaumformteils gemäß einem Ausführungsbeispiel in einer Seitenansicht.

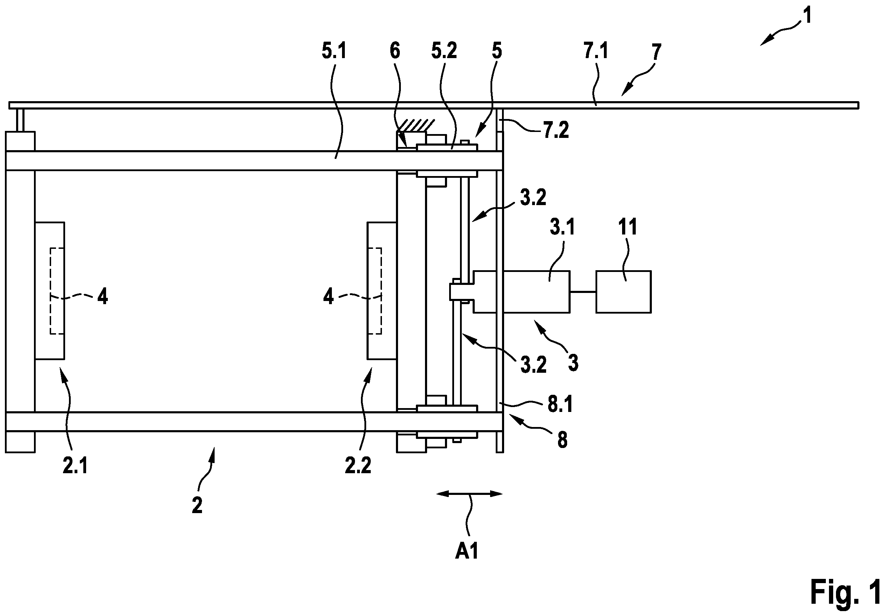

Fig. 1 zeigt eine Prinzipdarstellung einer Vorrichtung 1 zum Verarbeiten eines Partikelschaumaterials zum Herstellen eines Partikelschaumformteils gemäß einem ersten Ausführungsbeispiel. Die Vorrichtung 1 kann auch als Formteilautomat bezeichnet bzw. erachtet werden.

Die Vorrichtung 1 ist sonach zur Durchführung wenigstens eines Arbeitsprozesses zum Verarbeiten eines Partikelschaumaterials zum Herstellen eines Partikelschaumformteils eingerichtet. Wie sich im Weiteren ergibt, kann ein Expansions- oder Verbindungsprozess eines Partikelschaummaterials zum Herstellen eines Partikelschaumformteils als ein Beispiel für einen entsprechenden Arbeitsprozess erachtet werden.

Bei einem vermittels der Vorrichtung 1 verarbeitbaren bzw. zu verarbeitendem Partikelschaummaterial handelt es sich typischerweise um ein expandierbares zw. expandiertes Kunststoffpartikelmaterial. Das Partikelschaummaterial kann z. B. durch expandierbare bzw. expandierte Kunststoffpartikel gebildet sein bzw. expandierbare bzw. expandierte Kunststoffpartikel umfassen. In diesem Zusammenhang wird rein beispielhaft auf expandiertes und/oder expandierbares Polypropylen (PP bzw. EPP), expandiertes und/oder expandierbares Polystyrol (PS bzw. EPS) und auf expandiertes und/oder expandierbares thermoplastisches Elastomer (TPE) verwiesen. Mischungen von sich in wenigstens einem chemischen und/oder physikalischen Parameter unterscheidenden expandierbaren bzw. expandierten Partikelmaterialien bzw. Partikeln sind denkbar; der Begriff "Partikelschaummaterial" kann sonach auch Mischungen von sich in wenigstens einem chemischen und/oder physikalischen Parameter unterscheidenden expandierbaren bzw. expandierten Partikelmaterialien bzw. Partikeln beinhalten.

Die Vorrichtung 1 umfasst eine Formwerkzeugeinrichtung 2 und eine der Formwerkzeugeinrichtung 2 zuordenbare oder zugeordnete Antriebseinrichtung 3. Die Vorrichtung 1 kann, wenngleich in den in den Fig. gezeigten Ausführungsbeispielen nicht dargestellt, mehrere Formwerkzeugeinrichtungen 2 und mehrere Antriebseinrichtungen 3 umfassen.

Die Formwerkzeugeinrichtung 2 umfasst in den beispielhaften Konfigurationen der in den Fig. 1 - 3 gezeigten Ausführungsbeispiele jeweils ein erstes Formwerkzeugelement 2.1 und ein weiteres bzw. zweites Formwerkzeugelement 2.2. Das erste Formwerkzeugelement 2.1 ist entlang einer eine Bewegungsbahn definierenden, durch den Doppelpfeil P1 angedeuteten Bewegungsachse A1, hierbei handelt es sich um eine Linear- bzw. Translationsachse, relativ zu dem weiteren Formwerkzeugelement 2.2 bewegbar gelagert. Alternativ oder ergänzend, nicht den Ansprüchen entsprechend, könnte das weitere Formwerkzeug 2.2 entlang der Bewegungsachse A1 relativ zu dem ersten Formwerkzeugelement 2.1 bewegbar gelagert sein. Die Formwerkzeugeinrichtung 2 umfasst sonach mehrere Formwerkzeugelemente 2.1, 2.2, wobei wenigstens ein Formwerkzeugelement 2.1 entlang einer Bewegungsachse A1 relativ zu einem weiteren Formwerkzeugelement 2.2 bewegbar gelagert ist.

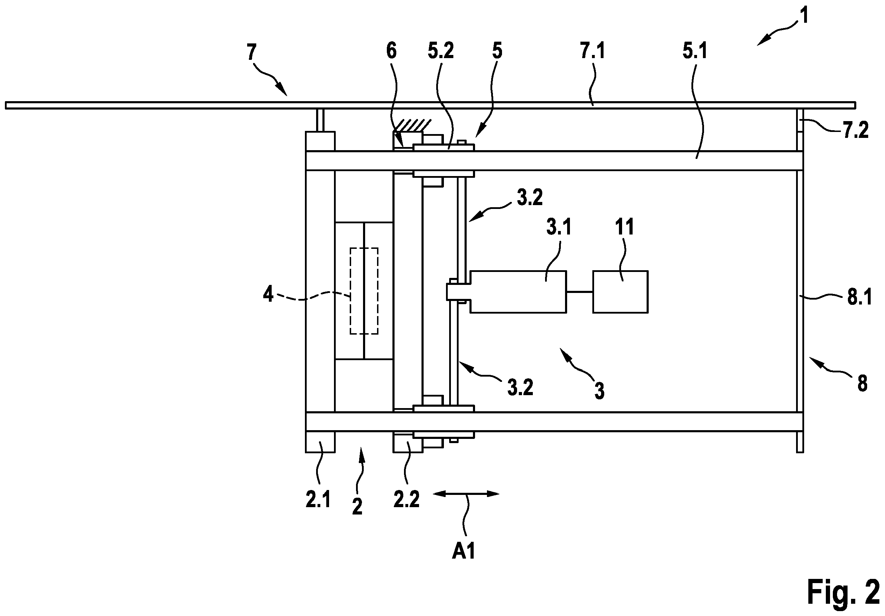

Das bewegbar gelagerte Formwerkzeugelement 2.1 ist zwischen einer in Fig. 1 gezeigten ersten Stellung und einer in Fig. 2 gezeigten weiteren bzw. zweiten Stellung bewegbar gelagert. Die erste Stellung kann, wie Fig. 1 zeigt, mit einer Offenstellung der Formwerkzeugeinrichtung 2 korreliert sein, die zweite Stellung kann, wie Fig. 2 zeigt, mit einer Schließstellung der Formwerkzeugeinrichtung 2 korreliert sein. In der Offenstellung der Formwerkzeugeinrichtung 2 ist eine Zugangsmöglichkeit in eine in Fig. 2 angedeutete formgebende Kavität 4 der Formwerkzeugeinrichtung 2 gegeben. In der Schließstellung ist keine Zugangsmöglichkeit in die formgebende Kavität 4 der Formwerkzeugeinrichtung 2 gegeben. Über die Bewegung des bewegbar gelagerten Formwerkzeugelements 2.1 relativ zu dem weiteren Formwerkzeugelement 2.2 ist sonach eine Offenstellung und eine Schließstellung der Formwerkzeugeinrichtung 2 realisierbar. Die Formwerkzeugeinrichtung 2 lässt sich sonach über Bewegungen des bewegbar gelagerten Formwerkzeugelements 2.1 in eine Offenstellung und in eine Schließstellung überführen.

Es ist denkbar, dass bewegbar gelagerte Formwerkzeugelement 2.1 und somit auch die Formwerkzeugeinrichtung 2 in mehrere Offenstellungen, sich in ihren jeweiligen Öffnungsgraden unterscheiden, und/oder in mehrere Schließstellungen, welche sich in ihren jeweiligen Schließstellungen unterscheiden, bewegbar sein kann.

Sofern das bewegbar gelagerte Formwerkzeugelement 2.1 in mehrere Schließstellungen bewegbar ist, gilt, dass eine erste Schließstellung einen ersten Schließgrad der Formwerkzeugeinrichtung 2 und eine zweite Schließstellung einen von dem ersten Schließgrad unterschiedlichen, d. h. insbesondere höheren, zweiten Schließgrad der Formwerkzeugeinrichtung 2 bedingen kann. Die Bewegung des bewegbar gelagerten Formwerkzeugelements 2.1 von der ersten Schließstellung in die zweite Schließstellung kann eine Prägehubbewegung, kurz ein Prägehub, sein. In der zweiten Schließstellung kann sonach eine Prägekraft auf ein in der formgebenden Kavität 4 befindliches Partikelschaummaterial ausgeübt werden. Durch Bewegen des bewegbar gelagerten Formwerkzeugelements 2.1 von der ersten Schließstellung in die zweite Schließstellung kann sonach ein Prägevorgang realisiert werden, in welchem eine Prägekraft auf ein in der formgebenden Kavität 4 befindliches Partikelschaummaterial ausübbar ist. Die zweite Schließstellung kann sonach als Prägestellung bezeichnet bzw. erachtet werden.

Gemäß der Erfindung der in den Fig. 1 - 3 gezeigten Ausführungsbeispiele umfasst die Formwerkzeugeinrichtung 2 das bewegbar gelagerte Formwerkzeugelement 2.1 und das nicht bewegbar gelagerte weitere Formwerkzeugelement 2.2. Das bewegbar gelagerte Formwerkzeugelement 2.1 ist zwischen der in Fig. 1 gezeigten ersten Stellung und der in Fig .2 gezeigten zweiten Stellung relativ zu dem weiteren Formwerkzeugelement 2.2 bewegbar gelagert. Ersichtlich ist die erste Stellung mit der Offenstellung der Formwerkzeugeinrichtung 2 korreliert und die zweite Stellung mit der Schließstellung der Formwerkzeugeinrichtung 2 korreliert.

Die nachfolgenden Ausführungen gelten analog für Vorrichtungen 1 mit anders konfigurierten Formwerkzeugeinrichtungen 2.

In den beispielhaften Konfigurationen der in den Fig. 1 - 3 gezeigten Ausführungsbeispiele ist ein Formwerkzeugelement 2.1, 2.2 als ein Formwerkzeugträgerelement, welches zum Tragen eines die formgebende Kavität 4 der Formwerkzeugeinrichtung 2 begrenzenden Formwerkzeugteils ausgebildet ist, ausgebildet. Alternativ oder ergänzend könnte ein Formwerkzeugelement 2.1, 2.2 als ein die formgebende Kavität 4 der Formwerkzeugeinrichtung 2 begrenzendes Formwerkzeugteil, insbesondere eine die formgebende Kavität 4 der Formwerkzeugeinrichtung 2 begrenzende Formwerkzeughälfte, ausgebildet sein.

Die Antriebseinrichtung 3 ist zur Erzeugung und/oder Übertragung einer das bewegbare Formwerkzeugelement 2.1 in eine Bewegung entlang der Bewegungsachse A1 versetzenden Antriebskraft eingerichtet. Die Antriebseinrichtung 3 kann, wie sich im Weiteren ergibt, mehrere zur Erzeugung und/oder Übertragung einer das bewegbar gelagerte Formwerkzeugelement 2.1 in eine Bewegung entlang der Bewegungsachse A1 versetzenden Antriebskraft zusammenwirkende Bestandteile umfassen.

Die Antriebseinrichtung 3 kann wenigstens eine Antriebseinheit 3.1 zur Erzeugung der Antriebskraft und wenigstens eine Kraftübertragungseinheit 3.2 zur Übertragung einer Antriebskraft auf das bewegbar gelagerte Formwerkzeugelement 2.1 umfassen. Die Antriebseinheit 3.1 kann z. B. als Antriebsmotor, insbesondere als elektrischer Antriebsmotor, ausgebildet sein. Die Kraftübertragungseinheit 3.2 kann z. B. als Kraftübertragungsmittel, insbesondere als Kraftübertragungsriemen, -kette, etc., ausgebildet sein.

In der beispielhaften Konfiguration des in den Fig. 1, 2 gezeigten Ausführungsbeispiels umfasst die Antriebseinrichtung 3 ersichtlich zwei Kraftübertragungseinheit 3.2. Die Antriebseinheit 3.1 ist sonach mit zwei Kraftübertragungseinheiten 3.2 gekoppelt, über welche sich eine Antriebskraft auf das bewegbar gelagerte Formwerkzeugelement 2.1 übertragen lässt.

Der hierin verwendete Begriff "Antriebskraft" umfasst in allen Ausführungsbeispielen auch ein "Antriebsmoment"; der Begriff "Antriebskraft" kann sonach mit einem "Antriebsmoment" gleichgesetzt werden.

Die Antriebseinrichtung 3 umfasst in den beispielhaften Konfigurationen der in den Fig. 1 - 3 gezeigten Ausführungsbeispiele mehrere Linearantriebseinrichtungen 5. Bei der Bewegungsachse A1, entlang welcher das bewegbar gelagerte Formwerkzeugelement 2.1 bewegbar ist, handelt es sich sonach um die erwähnte Linear- bzw. Translationsachse. Bei Bewegungen des bewegbar gelagerten Formwerkzeugelements 2.1 entlang der Bewegungsachse A1 handelt es sich sonach um Linear- bzw. Translationsbewegungen.

Eine jeweilige Linearantriebseinrichtung 5 umfasst in den beispielhaften Konfigurationen der in den Fig. 1 - 3 gezeigten Ausführungsbeispiele ein erstes Linearantriebselement 5.1 und ein mit diesem, insbesondere über einen mechanischen Eingriff, hierbei handelt es sich, wie sich im Weiteren ergibt, insbesondere zum einen Gewindeeingriff, zusammenwirkendes zweites Linearantriebselement 5.2. Das jeweilige erste Linearantriebselement 5.1 ist entlang der Bewegungsachse A1 bewegbar gelagert. Das jeweilige zweite Linearantriebselement 5.2 ist nicht entlang der Bewegungsachse A1 bewegbar gelagert. Das jeweilige zweite Linearantriebselement 5.2 ist eingerichtet, eine das jeweilige erste Linearantriebselement 5.1 in eine Bewegung entlang der Bewegungsachse A1 versetzende Antriebskraft auf das jeweilige erste Linearantriebselement 5.1 zu übertragen.

Das jeweilige erste Linearantriebselement 5.1 ist in den beispielhaften Konfigurationen der in den Fig. 1 - 3 gezeigten Ausführungsbeispiele als ein erstes Gewindeelement, d. h. als eine Gewindespindel, ausgebildet. Das jeweilige zweite Linearantriebselement 5.2 ist in den beispielhaften Konfigurationen der in den Fig. 1 - 3 gezeigten Ausführungsbeispiele jeweils als ein mit dem ersten Gewindeelement in mechanischem Eingriff stehendes zweites Gewindeelement, d. h. als eine mit der Gewindespindel in mechanischem Eingriff (Gewindeeingriff) stehende Spindelmutter, ausgebildet. Eine jeweilige Linearantriebseinrichtung 5 ist in den beispielhaften Konfigurationen der in den Fig. 1 - 3 gezeigten Ausführungsbeispielen sonach als ein eine Gewindespindel und eine Spindelmutter umfassendes Gewinde- bzw. Schraubgetriebe ausgebildet.

Die jeweiligen Gewindespindeln sind in den beispielhaften Konfigurationen der in den Fig. 1 - 3 gezeigten Ausführungsbeispiele translatorisch entlang der Bewegungsachse A1, jedoch nicht drehbar gelagert. Die jeweiligen Spindelmuttern sind in den beispielhaften Konfigurationen der in den Fig. 1 - 3 gezeigten Ausführungsbeispiele drehbar um eine Drehachse, d. h. insbesondere um die Bewegungsachse A1 oder eine Symmetrie- bzw. Zentralachse der Spindelmuttern, jedoch nicht translatorisch bewegbar gelagert. Eine jeweilige als Gewinde- bzw. Schraubgetriebe ausgebildete Linearantriebseinrichtung 5 ist in den beispielhaften Konfigurationen der in den Fig. 1 - 3 gezeigten Ausführungsbeispielen sonach mit einer translatorisch bewegbaren, jedoch nicht rotatorisch bewegbaren Gewindespindel und einer rotatorisch bewegbaren, jedoch nicht translatorisch bewegbaren Spindelmutter konfiguriert.

Die Antriebseinrichtung 3 stellt in den beispielhaften Konfigurationen der in den Fig. 1 - 3 gezeigten Ausführungsbeispiele eine Linearantriebseinrichtung dar. Entsprechend stellt die der Antriebseinrichtung 3 zugehörige Antriebseinheit 3.1 in den beispielhaften Konfigurationen der in den Fig. 1 - 3 gezeigten Ausführungsbeispiele eine einem jeweiligen ersten Linearantriebselement 5.1 bzw. zweiten Linearantriebselement 5.2 zuordenbare oder zugeordnete Linearantriebseinheit dar. Eine jeweilige Linearantriebseinheit ist entsprechend eingerichtet, eine das jeweilige erste Linearantriebselement 5.1 in eine Bewegung entlang der Bewegungsachse A1 versetzende Antriebskraft zu erzeugen. Eine jeweilige Linearantriebseinheit kann sonach konkret als Linearantriebsmotor, insbesondere als elektrischer Linearantriebsmotor, ausgebildet sein oder wenigstens einen solchen umfassen.

Anhand der beispielhaften Konfigurationen der in den Fig. 1 - 3 gezeigten Ausführungsbeispiele ist ersichtlich, dass eine Linearantriebseinheit mehreren Linearantriebseinrichtungen 5 zuordenbar oder zugeordnet sein kann. Eine Linearantriebseinheit kann sonach eingerichtet sein, eine ein erstes Linearantriebselement 5.1 einer ersten Linearantriebseinrichtung 5 (vgl. z. B. die obere Linearantriebseinrichtung 5 in den Fig. 1, 2) in eine Bewegung entlang der Bewegungsachse A1 versetzende Antriebskraft zu erzeugen und eine ein weiteres erstes Linearantriebselement 5.1 einer weiteren Linearantriebseinrichtung (vgl. z. B. die untere Linearantriebseinrichtung 5 in den Fig. 1, 2) in eine Bewegung entlang der Bewegungsachse A1 versetzende Antriebskraft zu erzeugen. Derart kann eine synchrone Bewegung mehrerer erster Linearantriebselemente 5.1 entlang der Bewegungsachse 5 realisiert und/oder sichergestellt werden.

In den beispielhaften Konfigurationen des in den Fig. 1, 2 gezeigten Ausführungsbeispiels ist die Linearantriebseinheit eingerichtet, eine die jeweiligen Spindelmuttern in eine Drehbewegung versetzende Antriebskraft zu erzeugen. Die in eine Drehbewegung versetzten Spindelmuttern versetzen die jeweiligen mit diesen in mechanischem Eingriff stehenden Gewindespindeln in eine translatorische Bewegung entlang der Bewegungsachse A1.

Die jeweiligen ersten Linearantriebselemente 5.1, d. h. die Gewindespindeln, sind in den beispielhaften Konfigurationen der in den Fig. 1 - 3 gezeigten Ausführungsbeispiele mit dem bewegbar gelagerten Formwerkzeugelement 2.1 gekoppelt, insbesondere bewegungsgekoppelt. Bewegungen der jeweiligen ersten Linearantriebselemente 5.1 korrelieren sonach aufgrund der Kopplung bzw. Bewegungskopplung mit dem bewegbar gelagerten Formwerkzeugelement 2.1 mit Bewegungen des bewegbar gelagerten Formwerkzeugelements 2.1.

Die Kopplung bzw. Bewegungskopplung zwischen den jeweiligen ersten Linearantriebselementen 5.1 und dem bewegbar gelagerten Formwerkzeugelement 2.1 kann durch eine direkte oder indirekte Befestigung der jeweiligen ersten Linearantriebselemente 5.1 an dem bewegbar gelagerten Formwerkzeugelement 2.1 realisiert sein; die jeweiligen ersten Linearantriebselemente 5.1 können sonach direkt oder indirekt an dem bewegbar gelagerten Formwerkzeugelement 2.1 befestigt sein. Die Befestigung der jeweiligen ersten Linearantriebselemente 5.1 an dem bewegbar gelagerten Formwerkzeugelement 2.1 kann über form- und/oder kraft- und/oder stoffschlüssige Befestigungsarten, d. h. z. B. über Klemm-, Spann-, Schraub-, oder Schweißbefestigungen, realisiert sein. Die Befestigung der jeweiligen ersten Linearantriebselemente 5.1 an dem bewegbar gelagerten Formwerkzeugelement 2.1 kann (beschädigungs- bzw. zerstörungsfrei) lösbar sein.

Das nicht bewegbare Formwerkzeugelement 2.2 weist in den beispielhaften Konfigurationen der in den Fig. 1 - 3 gezeigten Ausführungsbeispiele mehrere jeweils von einem ersten Linearantriebselement 5.1 durchsetzbare bzw. durchsetzte, insbesondere bohrungsartige bzw. - förmige oder schlitzartige bzw. -förmige, Öffnungen 6 auf. Die Öffnungen 6 sind so bemessen, dass zwischen den diese begrenzenden Wandungen des Formwerkzeugelements 2.2 und einem jeweiligen diese durchsetzenden ersten Linearantriebselement 5.1 ein gewisser Abstand gegeben ist, sodass das die jeweilige Öffnung 6 durchsetzende erste Linearantriebselement 5.1 die die Öffnung 6 begrenzenden Wandungen des Formwerkzeugelements 2.2 nicht kontaktiert. Mit anderen Worten weisen die Öffnungen 6 gegenüber einem diese jeweils durchsetzenden ersten Linearantriebselement 5.1 ein gewisses Übermaß auf, sodass die die jeweiligen Öffnungen 6 durchsetzenden ersten Linearantriebselemente 5.1 relativ zu dem die Öffnungen 6 aufweisenden Formwerkzeugelement 2.2 bewegbar gelagert sind. Die Öffnungen 6 können sonach als Durchgangsöffnungen für entsprechende erste Linearantriebselemente 5.1 bezeichnet bzw. erachtet werden.

Anhand der beispielhaften Konfigurationen der in den Fig. 1 - 3 gezeigten Ausführungsbeispiele ist ersichtlich, dass die Vorrichtung 1 eine den Linearantriebseinrichtungen 6 zuordenbare oder zugeordnete Führungseinrichtungen 7 umfassen kann, welche eingerichtet sind, ein entlang der Bewegungsachse A1 bewegbar gelagertes erstes Linearantriebselement 5.1 bei einer Bewegung entlang der Bewegungsachse A1 entlang der Bewegungsachse A1 zu führen. Bei Bewegungen des jeweiligen bewegbar gelagerten ersten Linearantriebselements 5.1 kann es sich sonach um geführte Bewegungen handeln. Derart kann eine exakte Bewegung und Positionierung des gelagerten Formwerkzeugelements 2.1 in jeweiligen ersten und zweiten Stellungen bzw. zwischen jeweiligen ersten und zweiten Stellungen sichergestellt werden. Da die zweite Stellung in den beispielhaften Konfigurationen der in den Fig. 1 - 3 gezeigten Ausführungsbeispiele mit der Schließstellung der Formwerkzeugeinrichtung 2 korreliert ist, lässt sich sonach auch eine exakte Positionierung der Formwerkzeugelemente 2.1, 2.2 in der Schließstellung der Formwerkzeugeinrichtung 2 sicherstellen.

Anhand der beispielhaften Konfigurationen der in den Fig. 1 - 3 gezeigten Ausführungsbeispiele ist weiter ersichtlich, dass eine entsprechende Führungseinrichtung 7 als Linearführung ausgebildet sein kann. Eine entsprechende Linearführung kann ein erstes Linearführungselement 7.1 und ein weiteres Linearführungselement 7.2 umfassen. Das erste Linearführungselement 7.1 wirkt unter Ausbildung einer Linearführung des bewegbar gelagerten Linearantriebselements 5.1 entlang der Bewegungsachse A1 mit dem weiteren Linearführungselement 7.2 zusammen. Das erste Linearführungselement 7.1 kann eine mit der Bewegungsachse A1 zusammenfallend oder parallel zu dieser angeordnete oder ausgerichtete Führungsachse definieren.

Anhand der Fig. 1 - 3 ist ersichtlich, dass das erste Linearführungselement 7.1 konkret z. B. als Führungsschiene oder -stange ausgebildet sein kann. Ein mit dem ersten Linearführungselement 7.1 zusammenwirkendes - hierunter kann insbesondere ein mechanischer Eingriff verstanden werden - weitere Linearführungselement 7.2. kann mit dem zu führenden bewegbar gelagerten ersten Linearantriebselement 5.1 gekoppelt, d. h. insbesondere bewegungsgekoppelt, sein. Das weitere Linearführungselement 7.2 kann sonach ebenso entlang der Bewegungsachse A1 bewegbar gelagert sein. Ein jeweiliges weiteres Linearführungselement 7.2 kann konkret z. B. als Führungsschlitten ausgebildet sein.

Anhand der beispielhaften Konfiguration des in den Fig. 1, 2 gezeigten Ausführungsbeispiels ist ersichtlich, dass die Vorrichtung 1 eine Abstützeinrichtung 8 umfassen kann, welche zur Abstützung wenigstens eines ersten Linearantriebselements 5.1, insbesondere in einer Betriebsposition und/oder -ausrichtung, eingerichtet ist.

Anhand der Fig. 1, 2 ist ersichtlich, dass die Abstützeinrichtung 8 eingerichtet sein kann, mehrere erste Linearantriebselemente 5.1 abzustützen. Die Abstützeinrichtung 8 kann hierfür wenigstens ein zwei erste Linearantriebselemente 5.1, insbesondere starr, miteinander unter Ausbildung einer Abstützung verbindendes, insbesondere traversenartiges bzw. -förmiges, Abstützelement 8.1 umfassen.

Anhand der beispielhaften Konfiguration des in den Fig. 1, 2 gezeigten Ausführungsbeispiels ist weiter ersichtlich, dass die Vorrichtung 1 mehrere in mehreren Raumebenen angeordnete oder ausgebildete Linearantriebseinrichtungen 5 umfassen kann. Unter Raumebenen können, wie in Fig. 1, 2 beispielhaft gezeigt, horizontal ausgerichtete Raumebenen verstanden werden. Prinzipiell sind auch Anordnungen in mehreren vertikal ausgerichteten Raumebenen oder in winklig bezüglich einer horizontalen oder vertikalen Raumebene ausgerichteten Raumebenen denkbar.

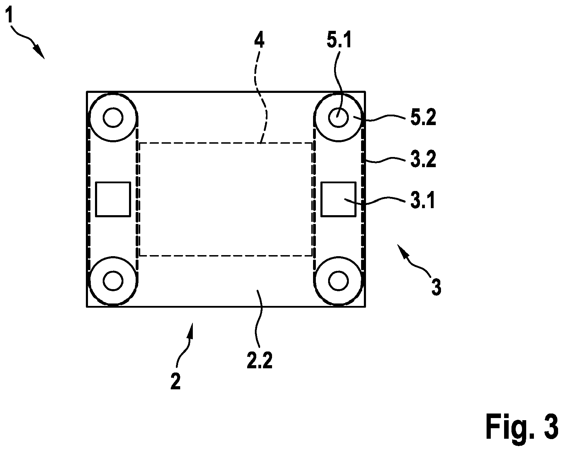

Anhand der beispielhaften Konfiguration des in Fig. 3 gezeigten Ausführungsbeispiels ist ersichtlich, dass die Vorrichtung 1 zwei parallel in einer ersten Raumebene angeordnete oder ausgebildete Linearantriebseinrichtungen 5 und zwei parallel in einer parallel zu der ersten Raumebene ausgerichteten weiteren Raumebene angeordnete oder ausgebildete Linearantriebseinrichtungen 5 umfassen kann. Die Vorrichtung 1 kann sonach eine erste Gruppe aus zwei in einer ersten Raumebene (obere oder linke Raumebene) angeordneten oder ausgebildeten Linearantriebseinrichtungen 5 und eine weitere Gruppe aus zwei in einer parallel zu der ersten Raumebene ausgerichteten weiteren Raumebene (untere oder rechte Raumebene) angeordneten oder ausgebildeten Linearantriebseinrichtungen 5 umfassen.

Anhand der beispielhaften Konfiguration des in Fig. 3 gezeigten Ausführungsbeispiels ist weiter ersichtlich, dass bei einer Stirnansicht auf die Formwerkzeugeinrichtung 3 bzw. einer in Fig. 3 gezeigten Ansicht auf die Haupterstreckungsebene des Formwerkzeugelements 2.2 vieleckige Anordnungen, d. h. hier beispielhaft viereckige Anordnungen, entsprechender Linearantriebseinrichtungen 5 bzw. erster Linearantriebselemente 5.1 möglich sind.

Die Anordnung der ersten Linearantriebselemente 5.1 ist dabei ersichtlich so gewählt, dass sich kein erstes Linearantriebselement 5.1 durch die formgebende Kavität 4 der Formwerkzeugeinrichtung 2 erstreckt.

Konkret zeigt die beispielhafte Konfiguration des in Fig. 3 gezeigten Ausführungsbeispiels, dass ausgehend von der hier beispielhaft rechteckigen Geometrie eines nicht näher bezeichneten Grundkörpers des Formwerkzeugelements 2.2 es denkbar ist, dass jeweils wenigstens ein erstes Linearantriebselement 5.1 im Bereich der oberen und/oder unteren und/oder seitlichen Ränder bzw. im Bereich der Ecken des rechteckigen Grundkörpers des Formwerkzeugelements 2.2 angeordnet ist. Gemäß der beispielhaften Konfiguration des in Fig. 3 gezeigten Ausführungsbeispiels ist in jeder Ecke des rechteckigen Grundkörpers des Formwerkzeugelements 2.2 ein erstes Linearantriebselement 5.1 angeordnet. Das jeweiligen ersten Linearantriebselemente 5.1 können, insbesondere mit einem freien Ende, stirnseitig an der jeweiligen Ecke des rechteckigen Grundkörpers des Formwerkzeugelements 2.2 ansetzen.

Anhand der beispielhaften Konfigurationen der in den Fig. 1 - 3 gezeigten Ausführungsbeispiele ist allgemein ersichtlich, dass mehrere in einer bestimmten Raumebene angeordnete erste Linearantriebselemente 5.1 parallel zueinander angeordnet sein können und dass jeweilige in unterschiedlichen Raumebenen angeordnete oder ausgebildete erste Linearantriebselemente 5.1 parallel zueinander angeordnet sein können.

Für alle Ausführungsbeispiele gilt, dass die Vorrichtung 1 wenigstens eine der Linearantriebseinrichtung 5 zuordenbare oder zugeordnete Bremseinrichtung 9 umfassen kann, welche zur Erzeugung einer eine Bewegung des oder der bewegbar gelagerten ersten Linearantriebselemente 5.1 entlang der Bewegungsachse A1 bremsenden Bremskraft oder zur Erzeugung einer eine Bewegung der bewegbar gelagerten ersten Linearantriebselemente 5.1 sperrenden Sperrkraft eingerichtet ist. Vermittels der Bremseinrichtung 9 lassen sich Bewegungen erster oder zweite Linearantriebselemente 5.1, 5.2 abbremsen - hierfür kann die Bremseinrichtung 9 eine einer auf ein bewegtes erstes oder zweites Linearantriebselement 5.1, 5.2 wirkenden Bewegungskraft entgegen wirkende Bremskraft erzeugen, welche in einer Verzögerung der Bewegung des jeweiligen ersten oder zweiten Linearantriebselements 5.1, 5.2 resultiert - oder vollständig sperren - hierfür kann die Bremseinrichtung 9 eine einer auf ein unbewegtes erstes oder zweites Linearantriebselement 5.1, 5.2 wirkenden Bewegungskraft entgegen wirkende Sperrkraft erzeugen, welche in einer Sperrung von Bewegungen des jeweiligen ersten oder zweiten Linearantriebselements 5.1, 5.2 resultiert.

Eine entsprechende Bremseinrichtung 9 kann insbesondere zur Erzeugung einer einer im Rahmen eines vermittels der Vorrichtung 1 erfolgenden Verarbeitungsvorgangs von Partikelschaummaterial, insbesondere eines durch ein druckbeaufschlagtes Prozessmedium, wie z. B. Dampf, bedingten Expansionsvorgangs von Partikelschaummaterial, erzeugten Kraft, entgegen wirkenden, insbesondere betragsmäßig gleichen oder höheren, Sperrkraft eingerichtet sein. Über eine entsprechende Bremseinrichtung 9 respektive über eine über die entsprechende Bremseinrichtung 9 erzeugbare Bremskraft lässt sich die Formwerkzeugeinrichtung 2 sonach auch im Rahmen des Betriebs der Vorrichtung 1 in der Schließstellung sichern. Die entsprechende Bremseinrichtung 9 kann die im Betrieb der Vorrichtung 1 in der Schließstellung auf die Formwerkzeugelemente 2.1, 2.2 wirkenden Kräfte sonach kompensieren, entsprechend können die Linearantriebseinrichtungen 5 von den im Betrieb der Vorrichtung 1 in der Schließstellung auf die Formwerkzeugelemente 2.1, 2.2 wirkenden Kräften isoliert werden.

Anhand der beispielhaften Konfiguration des in den Fig. 1, 2 gezeigten Ausführungsbeispiels ist ersichtlich, dass jeder Linearantriebseinrichtung eine eigene Bremseinrichtung 9 zugeordnet sein kann.

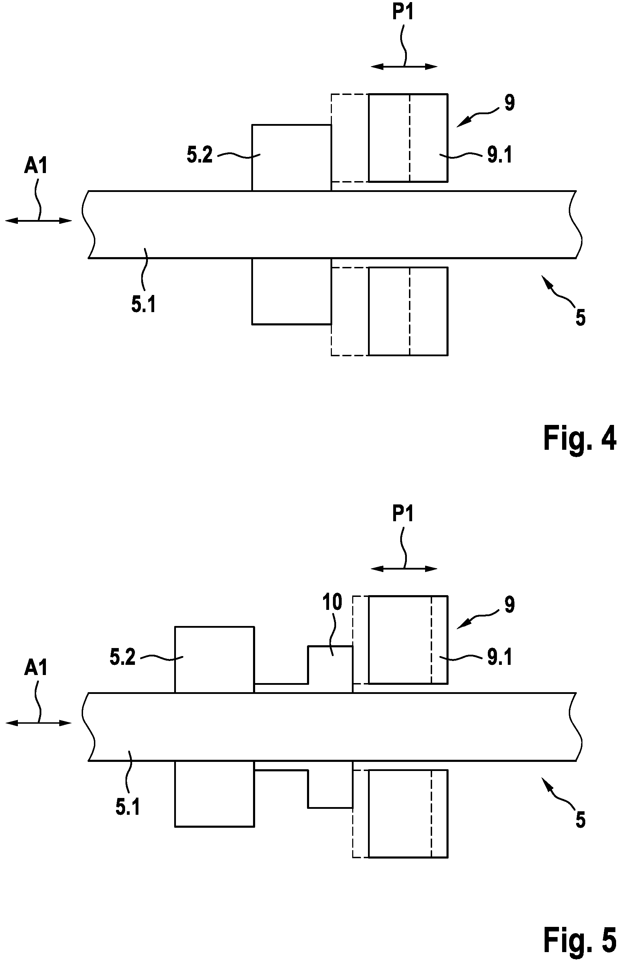

Fig. 4 zeigt eine Prinzipdarstellung einer Bremseinrichtung 9 einer Vorrichtung 1 zum Verarbeiten eines Partikelschaumaterials zum Herstellen eines Partikelschaumformteils gemäß einem Ausführungsbeispiel in einer Seitenansicht.

Die Bremseinrichtung 9 umfasst in der beispielhaften Konfiguration des in Fig. 4 gezeigten Ausführungsbeispiels ein Bremselement 9.1, welches in eine in Fig. 4 strichliert dargestellte Bremsstellung, in welcher dieses unter Ausbildung einer Bremskraft bzw. -wirkung direkt auf ein zweites Linearantriebselement 5.2 einwirkt, und einer Nichtbremsstellung, in welcher dieses nicht unter Ausbildung einer Bremskraft bzw. -wirkung direkt auf das zweite Linearantriebselement 5.2 einwirkt, bewegbar ist. Bei dem Bremselement 9.1 kann es sich z. B. um einen Bremsbelag handeln respektive kann das Bremselement 9.1 wenigstens einen solchen umfassen.

Fig. 5 zeigt eine Prinzipdarstellung einer Bremseinrichtung 9 einer Vorrichtung 1 zum Verarbeiten eines Partikelschaumaterials zum Herstellen eines Partikelschaumformteils gemäß einem weiteren Ausführungsbeispiel in einer Seitenansicht.

Die Bremseinrichtung 9 umfasst in der beispielhaften Konfiguration des in Fig. 5 gezeigten Ausführungsbeispiels ein Bremselement 9.1, welches in eine in Fig. 5 strichliert dargestellte Bremsstellung, in welcher dieses unter Ausbildung einer Bremskraft bzw. -wirkung indirekt auf ein zweites Linearantriebselement 5.2 einwirkt, und einer Nichtbremsstellung, in welcher dieses nicht unter Ausbildung einer Bremskraft bzw. -wirkung indirekt auf das zweite Linearantriebselement 5.2 einwirkt, bewegbar ist. Bei dem Bremselement 9.1 kann es sich wiederum z. B. um einen Bremsbelag handeln respektive kann das Bremselement 9.1 wenigstens einen solchen umfassen.

In der beispielhaften Konfiguration des in Fig. 5 gezeigten Ausführungsbeispiels umfasst die Bremseinrichtung 9 ein Bremselement 9.1, welches in eine Bremsstellung, in welcher dieses unter Ausbildung einer Bremskraft bzw. -wirkung gegen ein mit einem drehenden Linearantriebselement, d. h. insbesondere mit einem zweiten Linearantriebselement 5.2, verbundenes Bauelement 10 bewegt ist, und einer Nichtbremsstellung, in welcher dieses nicht unter Ausbildung einer Bremskraft bzw. -wirkung gegen das mit dem zweiten Linearantriebselement 5.2 verbundene Bauelement 10 bewegt ist, bewegbar ist.

Anhand der Fig. 4, 5 ist ersichtlich, dass die Bewegung des wenigstens einen Bremselements 9.1 in allen Ausführungsbeispielen in der bzw. parallel zu der Bewegungsachse A1 erfolgen kann; das wenigstens eine Bremselement 9.1 kann sonach in der bzw. parallel zu der Bewegungsachse A1 bewegbar gelagert sein. Jedoch sind prinzipiell auch radial bezüglich der Bewegungsachse A1 bewegbar gelagerte Bremselemente 9.1 denkbar.

Wenngleich in den Fig. nicht gezeigt, kann ein Bremselement 9.1 alternativ oder ergänzend auch direkt oder indirekt auf das erste Linearantriebselement 5.1 wirken. Ein Bremselement 9.1 könnte sonach beispielsweise direkt an einem ersten Linearantriebselement 5.1 angreifen, sodass die über das Bremselement erzeugte Bremskraft bzw. -wirkung eine Bewegung des ersten Linearantriebselements 5.1 entlang der Bewegungsachse A1 bremst oder sperrt.

Die Vorrichtung 1 kann in allen Ausführungsbeispielen eine hardware- und/oder softwaremäßig implementierte Steuereinrichtung 11 umfassen, welche zur Steuerung des Betriebs der Antriebseinrichtung 3 zur Realisierung bestimmter Bewegungs- bzw. Geschwindigkeitsprofile des bewegbar gelagerten Formwerkzeugelements 2.1 eingerichtet ist. Die Steuereinrichtung 11 kann insbesondere zur Erzeugung von den Betrieb der Antriebseinrichtung 3 steuernden Steuerinformationen eingerichtet sein. Die Steuereinrichtung 11 kann sonach auch zur Steuerung von Bewegungen der bewegbar gelagerten ersten Linearantriebselemente 5.1 eingerichtet sein. Ein entsprechendes Bewegungs- bzw. Geschwindigkeitsprofil kann z. B. eine bestimmte Bewegung des bewegbar gelagerten Formwerkzeugelements 2.1, insbesondere ausgehend von der Offenstellung, in die Schließstellung der Formwerkzeugeinrichtung 2 und/oder eine bestimmte Bewegung des bewegbar gelagerten Formwerkzeugelements 2.1, insbesondere ausgehend von der Schließstellung, in die Offenstellung der Formwerkzeugeinrichtung 2 definieren.

Die Steuereinrichtung 11 kann ferner, insbesondere auf Grundlage wenigstens eines Bewegungs- bzw. Geschwindigkeitsprofils des bewegbar gelagerten Formwerkzeugelements 2.1, zur Steuerung des Betriebs der Bremseinrichtung 9, insbesondere zur Realisierung bestimmter Bremskraftprofile, eingerichtet sein. Die Steuereinrichtung 11 kann sonach insbesondere zur Erzeugung von den Betrieb der Bremseinrichtung 9 steuernden Steuerinformationen eingerichtet sein. Die Steuereinrichtung 11 kann sonach auch zur Steuerung von Bewegungen eines jeweiligen bewegbar gelagerten Bremselements 9.1 eingerichtet sein.

Wenngleich in den Fig. nicht gezeigt, kann die Vorrichtung 1 wenigstens eine hardware- und/oder softwaremäßig implementierte Erfassungseinrichtung umfassen, welche zur Erfassung von Bewegungen und/oder Positionierungen des bewegbar gelagerten Formwerkzeugelements 2.1 und/oder eines bewegbar gelagerten ersten Linearantriebselements 5.1 eingerichtet ist. Die Erfassungseinrichtung kann wenigstens ein, z. B. optisch und/oder elektrisch und/oder magnetisch wirkendes, Erfassungselement umfassen, welches in Abhängigkeit von Bewegungen und/oder Positionierungen des bewegbar gelagerten Formwerkzeugelements 2.1 und/oder eines bewegbar gelagerten ersten Linearantriebselements 5.1 zur Erzeugung von Erfassungsinformationen eingerichtet ist. Entsprechende Erfassungsinformationen können Grundlage für die vermittels der Steuereinrichtung 11 durchführbare bzw. durchgeführte Steuerung des Betriebs der Antriebseinrichtung 3 und/oder der Bremseinrichtung 9 bilden. Die Erfassungseinrichtung kann sonach mit der Steuereinrichtung 11, und umgekehrt, insbesondere bidirektional, kommunizieren.

Wenngleich in den Fig. nicht gezeigt, umfasst die Vorrichtung 1 in allen Ausführungsbeispielen typischerweise weitere Funktionseinrichtungen, welche zum Verarbeiten von Partikelschaummaterial zum Herstellen eines Partikelschaumformteils erforderlich sind. Hierzu zählen beispielsweise eine Dampferzeugungseinrichtung zum Erzeugen von der Formwerkzeugeinrichtung zuführendem Dampf und/oder eine Dampfspeichereinrichtung zum Speichern von der Formwerkzeugeinrichtung zuführendem Dampf.

Mit den in den Fig. gezeigten Ausführungsbeispielen gezeigten Vorrichtungen 1 lässt sich ein Verfahren zum Verarbeiten eines Partikelschaummaterials zum Herstellen eines Partikelschaumformteils implementieren.

Einzelne, mehrere oder sämtliche im Zusammenhang mit einem bestimmten Ausführungsbeispiel beschriebenen Aspekte und/oder Merkmale können auf einzelne, mehrere oder sämtliche im Zusammenhang mit wenigstens einem weiteren Ausführungsbeispiel beschriebenen Aspekte und/oder Merkmale übertragen werden. Die Ausführungsbeispiele gemäß den Fig. können sonach miteinander kombiniert werden.

## Patentansprüche

1. Vorrichtung (1) zum Verarbeiten eines Partikelschaumaterials zum Herstellen eines Partikelschaumformteils, umfassend:
- wenigstens eine Formwerkzeugeinrichtung (2), umfassend ein bewegbar gelagertes erstes Formwerkzeugelement (2.1) und wenigstens ein nicht bewegbar gelagertes weiteres Formwerkzeugelement (2.2), wobei das erste Formwerkzeugelement (2.1) entlang einer Bewegungsachse (A1) relativ zu dem wenigstens einen weiteren Formwerkzeugelement (2.2) bewegbar gelagert ist;
- wenigstens eine der wenigstens einen Formwerkzeugeinrichtung (2) zuordenbare oder zugeordnete Antriebseinrichtung (3), welche zur Erzeugung und/oder Übertragung einer das erste Formwerkzeugelement (2.1) in eine Bewegung entlang der Bewegungsachse (A1) versetzenden Antriebskraft eingerichtet ist, wobei
die wenigstens eine Antriebseinrichtung (3) als Linearantriebseinrichtung ausgebildet ist oder eine solche umfasst, **dadurch gekennzeichnet, dass**
die wenigstens eine Linearantriebseinrichtung (5) wenigstens ein erstes Linearantriebselement (5.1) und wenigstens ein mit diesem, insbesondere über einen mechanischen Eingriff, zusammenwirkendes zweites Linearantriebselement (5.2) umfasst, wobei
das erste Linearantriebselement (5.1) entlang der Bewegungsachse (A1) bewegbar gelagert ist und das zweite Linearantriebselement (5.2) eingerichtet ist, eine das erste Linearantriebselement (5.1) in eine Bewegung entlang der Bewegungsachse (A1) versetzende Antriebskraft auf das erste Linearantriebselement (5.1) zu erzeugen und/oder zu übertragen,
wobei das wenigstens eine erste Linearantriebselement (5.1) mit dem bewegbar gelagerten ersten Formwerkzeugelement (2.1) gekoppelt, insbesondere bewegungsgekoppelt, ist,
wobei das wenigstens eine nicht bewegbar gelagerte Formwerkzeugelement (2.2) wenigstens eine von dem wenigstens einen ersten Linearantriebselement (5.1) durchsetzbare Öffnung (6) aufweist.

2. Vorrichtung nach Anspruch 1, wobei die Linearantriebseinrichtung (5) eine dem ersten Linearantriebselement (5.1) zuordenbare oder zugeordnete Linearantriebseinheit umfasst, welche eingerichtet ist, eine das erste Linearantriebselement (5.1) in eine Bewegung entlang der Bewegungsachse (A1) versetzende Antriebskraft zu erzeugen.

3. Vorrichtung nach Anspruch 1 oder 2, wobei
das mit dem bewegbar gelagerten ersten Formwerkzeugelement (2.1) gekoppelte, insbesondere bewegungsgekoppelte, erste Linearantriebselement (5.1) die wenigstens eine Öffnung (6) durchsetzt.

4. Vorrichtung nach einem der vorhergehenden Ansprüche, wobei das erste Linearantriebselement (5.1) als eine Gewindespindel ausgebildet ist oder eine solche umfasst und das zweite Linearantriebselement (5.2) als eine mit der Gewindespindel in Eingriff stehende Spindelmutter ausgebildet ist oder eine solche umfasst.

5. Vorrichtung nach einem der vorhergehenden Ansprüche, ferner umfassend wenigstens eine der wenigstens einen Linearantriebseinrichtung (5) zuordenbare oder zugeordnete Führungseinrichtung (7), welche eingerichtet ist, wenigstens ein entlang der Bewegungsachse (A1) bewegbar gelagertes Linearantriebselement (5.1) der wenigstens einen Linearantriebseinrichtung (5) bei einer Bewegung entlang der Bewegungsachse (A1) entlang der Bewegungsachse (A1) zu führen.

6. Vorrichtung nach einem der vorhergehenden Ansprüche, ferner umfassend mehrere in einer oder mehreren Raumebenen angeordnete oder ausgebildete Linearantriebseinrichtungen (5), wobei optional wenigstens zwei Linearantriebseinrichtungen (5) parallel in einer Raumebene angeordnet oder ausgebildet sind.

7. Vorrichtung nach Anspruch 6, ferner umfassend mehrere in einer oder mehreren Raumebenen angeordnete oder ausgebildete Linearantriebseinrichtungen (5), wobei wenigstens zwei Linearantriebseinrichtungen (5) parallel in einer Raumebene angeordnet oder ausgebildet sind, ferner umfassend wenigstens zwei parallel in einer ersten Raumebene angeordnete oder ausgebildete Linearantriebseinrichtungen (5) und wenigstens eine in wenigstens einer weiteren Raumebene angeordnete oder ausgebildete weitere Linearantriebseinrichtung (5), oder
wenigstens zwei parallel in einer ersten Raumebene angeordnete oder ausgebildete Linearantriebseinrichtungen und wenigstens zwei parallel in einer parallel oder winklig zu der ersten Raumebene ausgerichteten weiteren Raumebene angeordnete oder ausgebildete Linearantriebseinrichtungen.

8. Vorrichtung nach einem der vorhergehenden Ansprüche, ferner umfassend wenigstens eine Abstützeinrichtung (8), welche zur Abstützung wenigstens eines ersten Linearantriebselements (5.1), insbesondere in einer Betriebsposition und/oder - ausrichtung, eingerichtet ist, wobei die wenigstens eine Abstützeinrichtung (8) optional wenigstens ein zwei erste Linearantriebselemente (5.1), insbesondere starr, miteinander unter Ausbildung einer Abstützung verbindendes, insbesondere traversenartiges bzw. - förmiges, Abstützelement (8.1) umfasst.

9. Vorrichtung nach einem der vorhergehenden Ansprüche, ferner umfassend eine der wenigstens einen Linearantriebseinrichtung (5) zuordenbare oder zugeordnete Bremseinrichtung (9), welche zur Erzeugung einer eine Bewegung eines bewegbar gelagerten Linearantriebselements (5.1) der wenigstens einen Linearantriebseinrichtung (5) entlang der Bewegungsachse (A1) bremsenden Bremskraft oder zur Erzeugung einer eine Bewegung eines bewegbar gelagerten Linearantriebselements (5.1) der wenigstens einen Linearantriebseinrichtung (5) sperrenden Sperrkraft eingerichtet ist.

10. Vorrichtung nach einem der vorhergehenden Ansprüche, wobei die oder eine Bremseinrichtung (9) zur Erzeugung einer einer im Rahmen eines vermittels der Vorrichtung (1) erfolgenden Verarbeitungsvorgangs von Partikelschaummaterial, insbesondere eines durch ein druckbeaufschlagtes Prozessmedium bedingten Expansionsvorgangs von Partikelschaummaterial, erzeugten Kraft, entgegen wirkenden, insbesondere betragsmäßig gleichen oder höheren, Sperrkraft eingerichtet ist.

11. Vorrichtung nach einem der vorhergehenden Ansprüche, ferner umfassend eine Steuereinrichtung (11), welche zur Steuerung des Betriebs der Antriebseinrichtung (3) zur Realisierung bestimmter Bewegungsprofile wenigstens eines bewegbar gelagerten Formwerkzeugelements (2.1) eingerichtet ist.

12. Vorrichtung nach einem der vorhergehenden Ansprüche, ferner umfassend wenigstens eine Steuereinrichtung (11), welche, insbesondere auf Grundlage wenigstens eines Bewegungsprofils eines bewegbar gelagerten Formwerkzeugelements (2.1), zur Steuerung des Betriebs der Bremseinrichtung (9), insbesondere zur Realisierung bestimmter Bremskraftprofile, eingerichtet ist; und/oder
eine Erfassungseinrichtung, welche zur Erfassung von Bewegungen und/oder Positionierungen wenigstens eines bewegbar gelagerten Formwerkzeugelements (2.1) und/oder wenigstens eines bewegbar gelagerten Linearantriebselements (5.1) der wenigstens einen Linearantriebseinrichtung (5) eingerichtet ist.

13. Vorrichtung nach einem der vorhergehenden Ansprüche, wobei das Formwerkzeugelement (2.1, 2.2) als ein eine formgebende Kavität (4) der Formwerkzeugeinrichtung (2) begrenzendes Formwerkzeugteil, insbesondere eine eine formgebende Kavität (4) der Formwerkzeugeinrichtung (2) begrenzende Formwerkzeughälfte, oder als ein Formwerkzeugträgerelement, welches zum Tragen eines eine formgebende Kavität (4) der Formwerkzeugeinrichtung (2) begrenzenden Formwerkzeugteils ausgebildet ist, ausgebildet ist.

## Claims

1. Device (1) for processing a particle foam foam material for the manufacture of a particle foam molding, comprising:
- at least one molding tool device (2), comprising a movably mounted first molding tool element (2.1) and at least one non-movably mounted further molding tool element (2.2), wherein the first molding tool element (2.1) is movably mounted along a motion axis (A1) relative to the at least one further molding tool element (2.2);
- at least one of the at least one mold tool device (2) assignable or associated drive device (3), which is set up for the generation and / or transmission of a the first mold tool element (2.1) in a movement along the axis of movement (A1) displacing drive force, wherein which is formed or comprises at least one drive device (3) as a linear drive device, **characterized in that**
which comprises at least one linear actuator (5) at least one first linear actuator element (5.1) and at least one second linear actuator element (5.2) interacting with it, in particular via a mechanical engagement, wherein
the first linear actuator element (5.1) is movably mounted along the axis of motion (A1) and the second linear actuator element (5.2) is configured to generate and/or transfer a driving force displacing the first linear actuator element (5.1) into a movement along the axis of motion (A1) to the first linear actuator element (5.1),
wherein the at least one first linear drive element (5.1) is coupled to the movably mounted first mold tool element (2.1), in particular motion-coupled,
wherein the at least one non-movably mounted mold tool element (2.2) has at least one of the at least one first linear drive element (5.1) enforceable opening (6).

2. Device according to claim 1, wherein the linear actuator means (5) comprises a linear actuator unit assignable to the first linear actuator element (5.1) or associated, which is configured to generate a driving force displacing the first linear actuator element (5.1) in a motion along the axis of motion (A1).

3. Device according to claim 1 or 2, wherein
the first linear actuator element (5.1) coupled to the movably mounted first mold tool element (2.1), in particular motion-coupled, which penetrates at least one opening (6).

4. Device according to any one of the preceding claims, wherein the first linear actuator element (5.1) is formed or comprises a threaded spindle and the second linear actuator element (5.2) is formed or comprises a spindle nut engaged with the threaded spindle.

5. Device according to one of the preceding claims, further comprising at least one of the at least one linear drive device (5) assignable or associated guide device (7), which is set up to guide at least one movably mounted along the axis of movement (A1) linear drive element (5.1) of at least one linear drive device (5) in a movement along the axis of movement (A1) along the axis of movement (A1).

6. Device according to one of the preceding claims, further comprising several linear actuator devices (5) arranged or formed in one or more spatial planes, wherein optionally at least two linear actuator devices (5) are arranged or formed in parallel in a spatial plane.

7. Device according to claim 6, further comprising several linear actuator devices (5) arranged or formed in one or more spatial planes, wherein at least two linear actuator devices (5) are arranged or formed in parallel in a spatial plane, further comprising at least two linear actuator devices (5) arranged or formed in parallel in a first spatial plane and at least one further linear actuator device (5) arranged or formed in at least one further spatial plane, or
At least two linear actuator devices arranged or formed in parallel in a first spatial plane and at least two linear actuator devices arranged or formed in parallel in a further spatial plane aligned parallel or angular to the first spatial plane.

8. Device according to one of the preceding claims, further comprising at least one support device (8), which is set up for supporting at least one first linear actuator element (5.1), in particular in an operating position and / or orientation, wherein the at least one support device (8) optionally comprises at least one two first linear actuator elements (5.1), in particular rigid, connecting with each other by forming a support, in particular traverse-like or -shaped, support element (8.1).

9. Device according to one of the preceding claims, further comprising one of the at least one linear drive device (5) assignable or associated braking device (9) which is set up for generating a movement of a movably mounted linear drive element (5.1) of at least one linear drive device (5) along the axis of movement (A1) braking force or for generating a movement of a movably mounted linear drive element (5.1) of at least one linear drive device (5) locking locking force.

10. Device according to one of the preceding claims, wherein the or a braking device (9) for generating a force generated within the framework of a processing process of particle foam material carried out by means of the device (1), in particular an expansion process of particle foam material caused by a pressurized process medium, counteracting, in particular equal or higher, locking force is set up.

11. Device according to one of the preceding claims, further comprising a control device (11) which is set up for controlling the operation of the drive device (3) for realizing certain movement profiles of at least one movably mounted mold tool element (2.1).

12. Device according to one of the preceding claims, further comprising at least one control device (11), which is set up, in particular on the basis of at least one movement profile of a movably mounted mold tool element (2.1), for controlling the operation of the braking device (9), in particular for realizing certain braking force profiles; and/or
a detection device which is set up for detecting movements and/or positionings of at least one movably mounted mold tool element (2.1) and/or at least one movably mounted linear drive element (5.1) of at least one linear drive device (5).

13. Device according to any one of the preceding claims, wherein the mold tool element (2.1, 2.2) is formed as a forming cavity (4) of the mold tool device (2) limiting mold tool part, in particular a forming cavity (4) of the mold tool device (2) limiting mold tool half, or as a mold tool carrier element formed for carrying a forming cavity (4) of the mold tool device (2) limiting mold tool part.

## Revendications

1. Dispositif (1) pour le traitement d'une pellicule de particules en vue de la fabrication d'une mousse de particules moulée, comprenant:
- au moins un outillage de moule (2), comprenant un premier élément d'outillage de moule (2.1) mobile et au moins un autre élément d'outillage de moule (2.2) non mobile, le premier élément d'outillage de moule (2.1) étant mobile le long d'un axe de mouvement (A1) par rapport auquel au moins un autre élément d'outillage de moule (2.2) mobile;
- au moins l'un des dispositifs d'entraînement (3) attribuables ou attribués à au moins un outillage de formage (2), qui est équipé pour générer et/ou transférer une force motrice déplaçant le premier élément d'outillage de formage (2.1) dans un mouvement le long de l'axe de mouvement (A1), étant entendu que:
comportant au moins un dispositif de propulsion (3) conçu comme un dispositif de propulsion linéaire ou comprenant un tel dispositif, **caractérisé en ce que**:
comprenant au moins un dispositif d'actionneur linéaire (5) au moins un premier élément d'actionneur linéaire (5.1) et au moins un second élément d'actionneur linéaire (5.2) qui interagit avec celui-ci, notamment par une intervention mécanique, étant entendu que:
le premier élément d'actionneur linéaire (5.1) est mobile le long de l'axe de mouvement (A1) et le deuxième élément d'actionneur linéaire (5.2) est configuré pour produire et/ou transférer une force motrice qui déplace le premier élément d'actionneur linéaire (5.1) en un mouvement le long de l'axe de mouvement (A1) au premier élément d'actionneur linéaire (5.1);
où au moins un premier élément d'actionneur linéaire (5.1) est couplé avec le premier élément d'outillage mobile (2.1), en particulier couplé au mouvement,
où au moins un élément d'outil de formage (2.2) inamovible présente au moins une ouverture (6) opposable par au moins un premier élément d'actionneur linéaire (5.1).

2. Dispositif selon la revendication 1, dans lequel le dispositif d'actionneur linéaire (5) comprend une unité d'actionneur linéaire attribuable ou attribuée au premier élément d'actionneur linéaire (5.1), qui est équipée pour produire une force d'entraînement décalant le premier élément d'actionneur linéaire (5.1) dans un mouvement le long de l'axe de mouvement (A1).

3. Dispositif selon la revendication 1 ou 2, dans lequel:
le premier élément d'actionneur linéaire (5.1) couplé au premier élément d'outil de formage (2.1) mobile, notamment couplé au mouvement, qui traverse au moins une ouverture (6).

4. Dispositif selon l'une quelconque des revendications précédentes, dans lequel le premier élément d'actionneur linéaire (5.1) est conçu ou comprend une broche filetée et le deuxième élément d'actionneur linéaire (5.2) est conçu ou comprend un écrou de broche engagé avec la broche filetée.

5. Dispositif selon l'une quelconque des revendications précédentes, comprenant en outre au moins un des dispositifs de guidage (7) attribuables ou associés à au moins un dispositif d'actionneur linéaire (5), qui est équipé pour guider au moins un élément d'actionneur linéaire (5.1) mobile le long de l'axe de mouvement (A1) d'au moins un dispositif d'actionneur linéaire (5) lors d'un mouvement le long de l'axe de mouvement (A1) le long de l'axe de mouvement (A1).

6. Dispositif selon l'une quelconque des revendications précédentes, comprenant en outre plusieurs dispositifs d'actionneur linéaire (5) disposés ou formés dans un ou plusieurs plans d'espace, dans lesquels, en option, au moins deux dispositifs d'actionneur linéaire (5) sont disposés ou formés parallèlement dans un plan d'espace.

7. Dispositif selon la revendication 6, comprenant en outre plusieurs dispositifs d'actionneur linéaire (5) disposés ou formés dans un ou plusieurs plans d'espace, dans lesquels au moins deux dispositifs d'actionneur linéaire (5) sont disposés ou formés parallèlement dans un plan d'espace, en outre comprenant au moins deux dispositifs d'actionneur linéaire (5) disposés ou formés parallèlement dans un premier plan d'espace et au moins un autre dispositif d'actionneur linéaire (5) disposé ou formé dans au moins un autre plan d'espace, ou
au moins deux actionneurs linéaires disposés ou formés parallèlement dans un premier plan d'espace et au moins deux actionneurs linéaires disposés ou formés parallèlement dans un autre plan d'espace parallèle ou incliné par rapport au premier plan d'espace.

8. Dispositif selon l'une quelconque des revendications précédentes, comprenant en outre au moins un dispositif de soutien (8), qui est équipé pour soutenir au moins un premier élément d'actionneur linéaire (5.1), en particulier dans une position et/ou une orientation de fonctionnement, étant entendu qu'au moins un dispositif de soutien (8) comprend en option au moins deux premiers éléments d'actionneur linéaire (5.1), en particulier rigides, connectant entre eux en formant un dispositif de soutien, en particulier en forme de traverse ou de traverse (8.1).

9. Dispositif selon l'une quelconque des revendications précédentes, comprenant en outre l'un des dispositifs de freinage pouvant être attribués ou attribués à au moins un dispositif d'actionneur linéaire (5) (9), qui est prévu pour produire un mouvement d'un élément d'actionneur linéaire mobile (5.1) qui freine au moins un dispositif d'actionneur linéaire (5) le long de l'axe de mouvement (A1) ou pour produire un mouvement d'un élément d'actionneur linéaire mobile (5.1) qui bloque au moins un dispositif d'actionneur linéaire (5).

10. Dispositif selon l'une quelconque des revendications précédentes, dans lequel le ou un dispositif de freinage (9) est équipé pour produire une force de blocage contrecarrante, notamment égale ou supérieure en quantité, générée par une opération de traitement de la mousse particulaire effectuée par l'intermédiaire du dispositif (1), en particulier une opération de dilatation de la mousse particulaire due à un milieu de procédé soumis à pression.

11. Dispositif selon l'une quelconque des revendications précédentes, comprenant en outre un dispositif de commande (11) qui est équipé pour commander le fonctionnement de l'appareil d'entraînement (3) afin de réaliser certains profils de mouvement d'au moins un élément d'outillage mobile (2.1).

12. Dispositif selon l'une quelconque des revendications précédentes, comprenant en outre au moins un dispositif de commande (11) qui est équipé, notamment sur la base d'au moins un profil de mouvement d'un élément d'outillage mobile (2.1), pour commander le fonctionnement du dispositif de freinage (9), notamment pour réaliser certains profils de force de freinage; et/ou
un dispositif de détection conçu pour détecter les mouvements et/ou le positionnement d'au moins un élément d'outillage mobile (2.1) et/ou d'au moins un élément d'actionneur linéaire mobile (5.1) équipé d'au moins un dispositif d'actionneur linéaire (5).

13. Dispositif selon l'une quelconque des revendications précédentes, dans lequel l'élément d'outil de moule (2.1, 2.2) est conçu comme une pièce d'outil de moule délimitant une cavité de formation (4) de l'outil de moule (2), en particulier une moitié d'outil de moule délimitant une cavité de formation (4) de l'outil de moule (2), ou comme un élément de support d'outil de moule conçu pour porter une pièce d'outil de moule délimitant une cavité de formation (4) de l'outil de moule (2).
